(19) Europäisches Patentamt
European Patent Office
Office européen des brevets

(11) **EP 4 637 140 A1**

(12) **EUROPEAN PATENT APPLICATION**

(43) Date of publication:
**22.10.2025 Bulletin 2025/43**

(21) Application number: **24315170.1**

(22) Date of filing: **15.04.2024**

(51) International Patent Classification (IPC):
*H04N 19/117* (2014.01)    *H04N 19/46* (2014.01)
*H04N 19/70* (2014.01)    *H04N 19/85* (2014.01)

(52) Cooperative Patent Classification (CPC):
**H04N 19/117; H04N 19/46; H04N 19/70;
H04N 19/85;** H04N 19/186

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **Demarty, Claire-Helene
35520 MONTREUIL LE GAST (FR)**
• **Ameur, Zoubida
35510 CESSON-SEVIGNE (FR)**
• **Aumont, Franck
35770 VERN SUR SEICHE (FR)**
• **Blonde, Laurent
35235 THORIGNE-FOUILLARD (FR)**
• **Reinhard, Erik
35630 HEDE-BAZOUGES (FR)**
• **Le Meur, Olivier
35160 TALENSAC (FR)**

(74) Representative: **Rittner, Karsten
Rittner & Partner
Patentanwälte mbB
Schiffgraben 17
30159 Hannover (DE)**

(54) **TRANSMITTING AND USING A FILM GRAIN STYLE VECTOR IN THE EXISTING FILM GRAIN SEI**

(57)    Systems, methods, and instrumentalities may be provided for specifying metadata in a moving picture experts group (MPEG) film grain characteristics supplemental enhancement information (SEI) message related to the synthesis of film grain at the encoder/decoder side. These metadata may include a style vector that may include in a compact yet rich manner all characteristics needed to define the style of film grain that is present in the original content. Information about how the style vector(s) were created, their sizes, how they should be aggregated, how to preprocess them, which quality is expected once film grain is synthesized, and on the processing to synthesize back film grain on the decoded image may be provided and specified as syntax elements in the current MPEG SEI message. The MPEG SEI message is decoded by the decoder and passed on to the processing block that may synthesize back film grain on the content.

FIG. 11

**Description**

**BACKGROUND**

Video coding systems may be used to compress digital video signals, e.g., to reduce the storage and/or transmission bandwidth needed for such signals. Video coding systems may include, for example, block-based, wavelet-based, and/or object-based systems.

**SUMMARY**

Systems, methods, and instrumentalities are disclosed for a device configured for one or more of video coding (e.g., encoding and/or decoding), distribution, or consumption.

In examples, a device (e.g., a decoder for video decoding) may obtain (e.g., obtain in a bitstream) a picture (e.g., from encoded data) and encoded data comprising a moving picture experts group (MPEG) film grain characteristics supplemental enhancement information (SEI) message. The device may decode the encoded data to obtain the MPEG film grain characteristics SEI message comprising at least first style vector or a first set of parameters associated with the first style vector. For example, the first set of parameters may comprise information about usage of the first style vector. The device may obtain a first parameter from the MPEG film grain characteristic SEI message. For example, the parameter may indicate a type of film grain simulation model of type style vector-based synthesis and a first style vector associated with the film grain simulation model. For example, the first style vector may indicate a style of film grain to be applied during film grain synthesis. The device may generate the film grain on the picture. For example, the film grain may be generated using a film grain simulation model of the type of film grain simulation model indicated by the first parameter, and the first style vector associated with film grain simulation model. The device may use (e.g., send for displaying), the picture with the generated film grain.

The film grain characteristics SEI message may include a set of parameters associated with the first style vector. The set of parameters may include at least one or more of a color space indicator, or a pre-processing indicator, or a channel component indicator, or an analysis indicator wherein the color space indicator indicates a color space to which the decoded picture should be converted before used as an input to the film grain simulation model, and wherein the pre-processing indicator indicates whether to preprocess the style vector before applying the style vector to the decoded picture, wherein the channel component indicator indicates on which channel component of said picture the film grain should be synthesized, wherein the analysis indicator indicates which analyzer model was used to generate the style vector. In some examples, the MPEG film grain characteristics SEI message may include a second style vector and a second set of parameters associated with the second style vector. In some examples, the size of the first style vector or the second style vector may be 8 bits.

In some examples, the second set of parameters comprises information associated with usage of the second style vector. The first set of parameters may include a second parameter that is representative of a style vector aggregation process to be used to aggregate the first style vector and the second style vector in an aggregated style vector for use to synthesize film grain on the decoded picture. In some examples, the first style vector or the second style vector may be computed to be used on different parts of the picture.

**BRIEF DESCRIPTION OF THE DRAWINGS**

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 illustrates an example video encoder.

FIG. 3 illustrates an example video decoder.

FIG. 4 illustrates an example of a system in which various aspects and examples may be implemented.

FIG. 5 illustrates an example of film grain analysis and synthesis in the context of video encoding/decoding.

FIG. 6 illustrates an example film grain model for a given Y intensity range.

FIG. 7 illustrates an example of variation of grain standard deviation versus Y intensity.

FIG. 8 illustrates an example evolution of the scaling factor according to the intensity level.

FIG. 9 illustrates a flowchart showing an example of a process for SEI message generation and bitstream encapsulation that may be performed by an encoder during encoding.

FIG. 10 illustrates a flowchart showing an example of encoder-side workflow if more than one film grain analyzers are used.

FIG. 11 illustrates a flowchart showing an example of a process for decoding and use of the style vector and associated information at the receiver side.

## DETAILED DESCRIPTION

A more detailed understanding may be had from the following description, given by way of example in conjunction with the accompanying drawings.

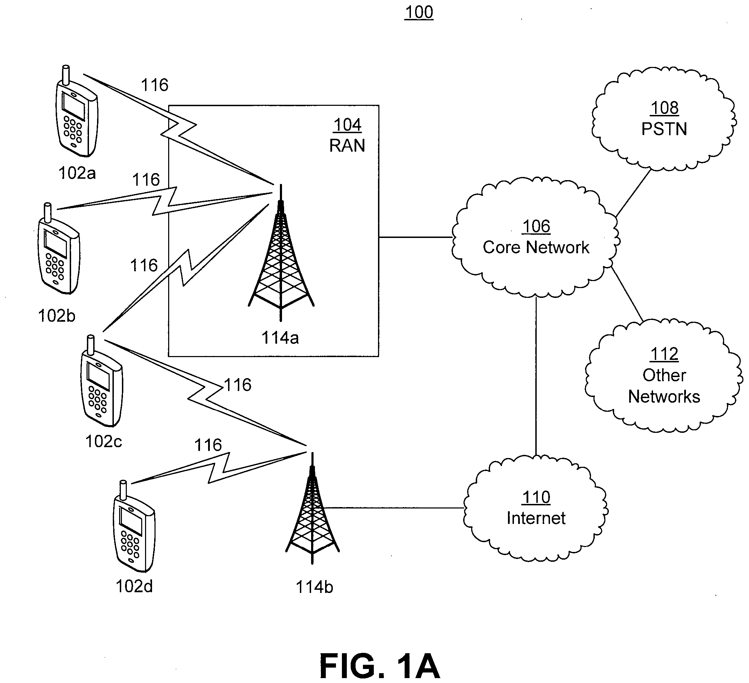

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. a (e.g., each) of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

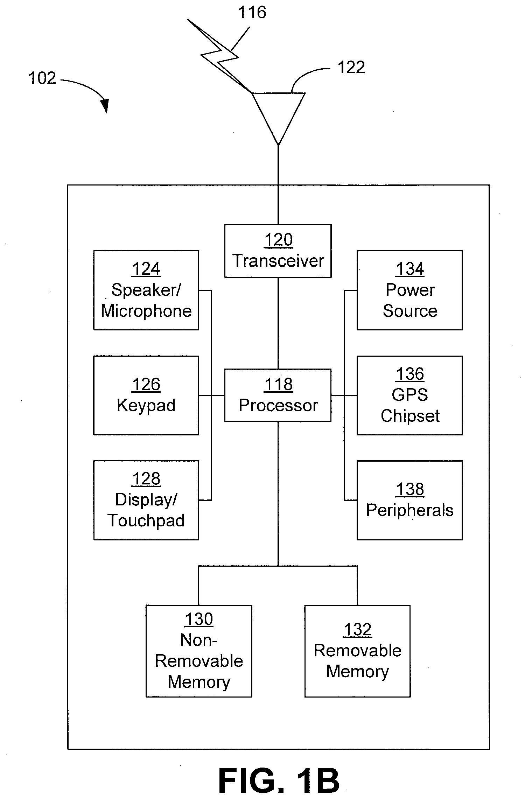

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

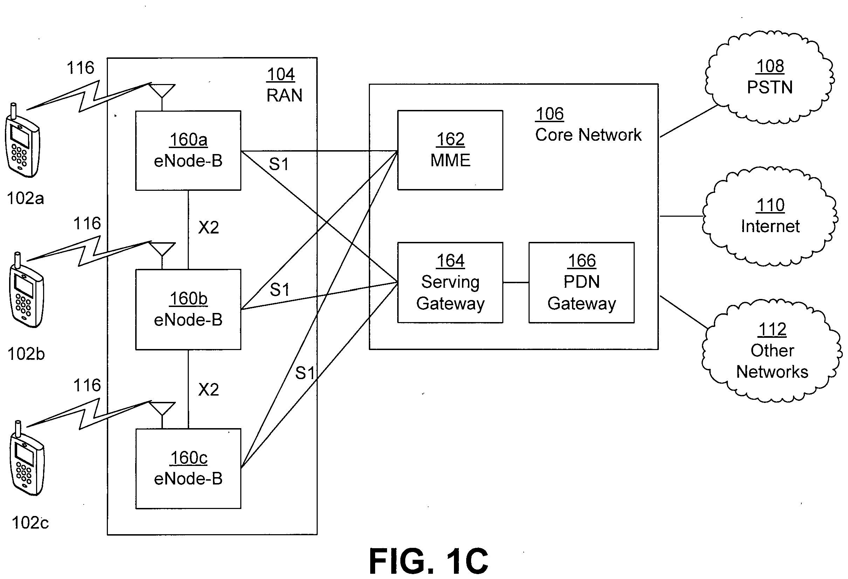

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

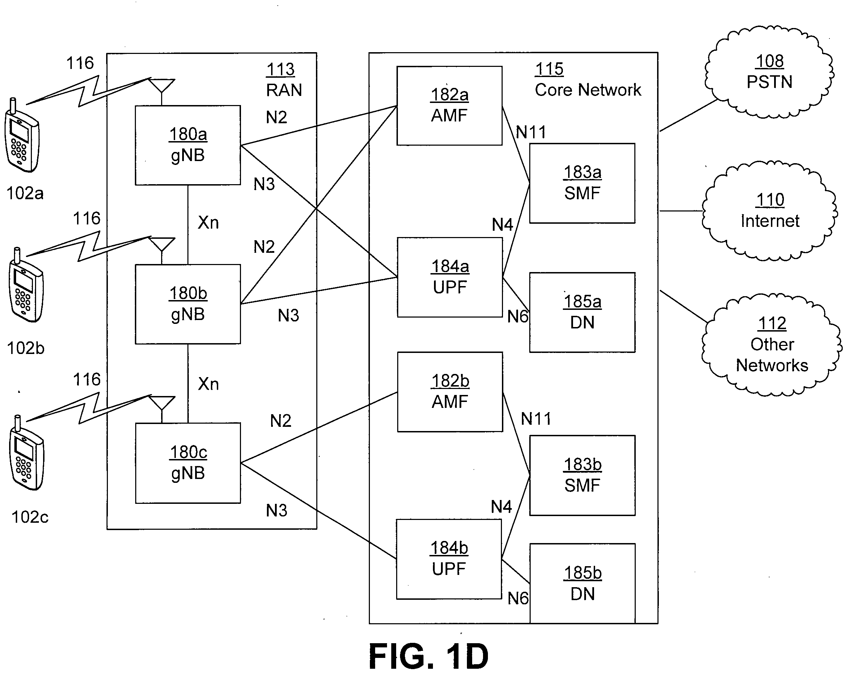

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

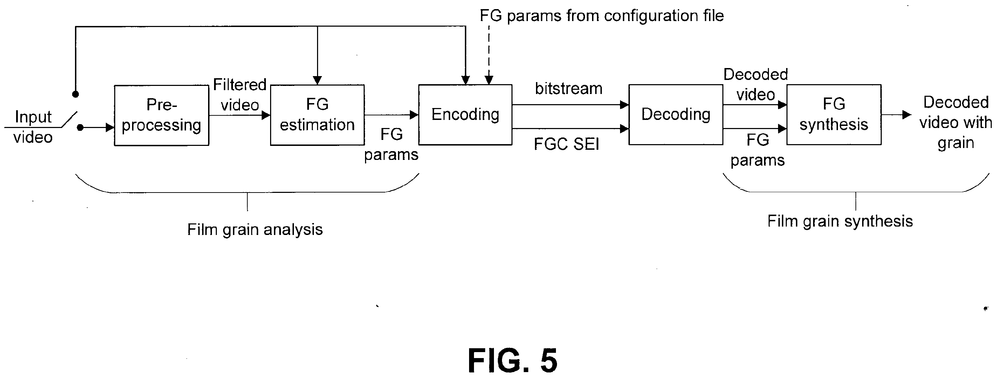

The aspects described and contemplated in this application may be implemented in many different forms. FIGS. 5-11 described herein may provide some examples, but other examples are contemplated. The discussion of FIGS. 5-11 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

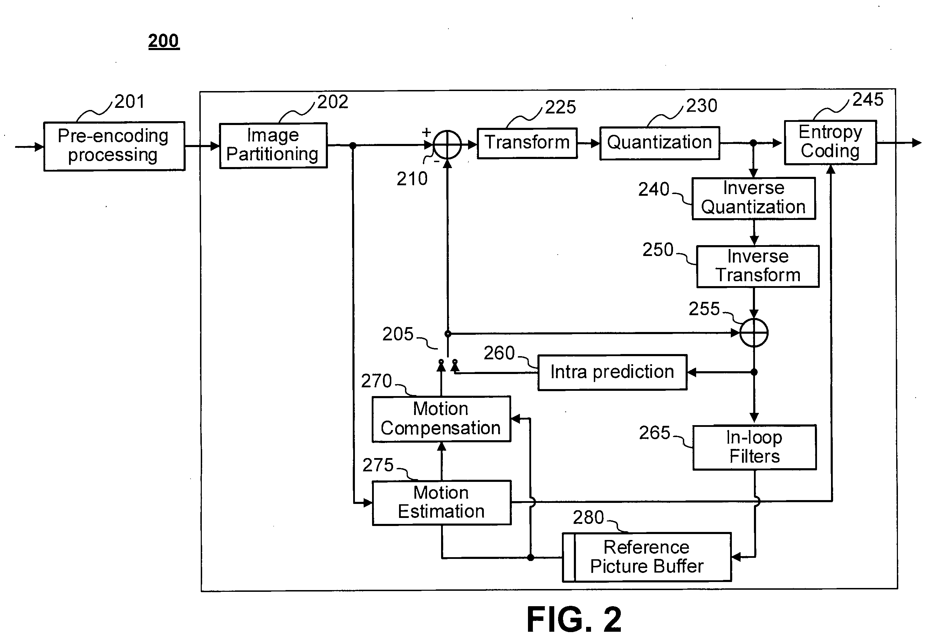

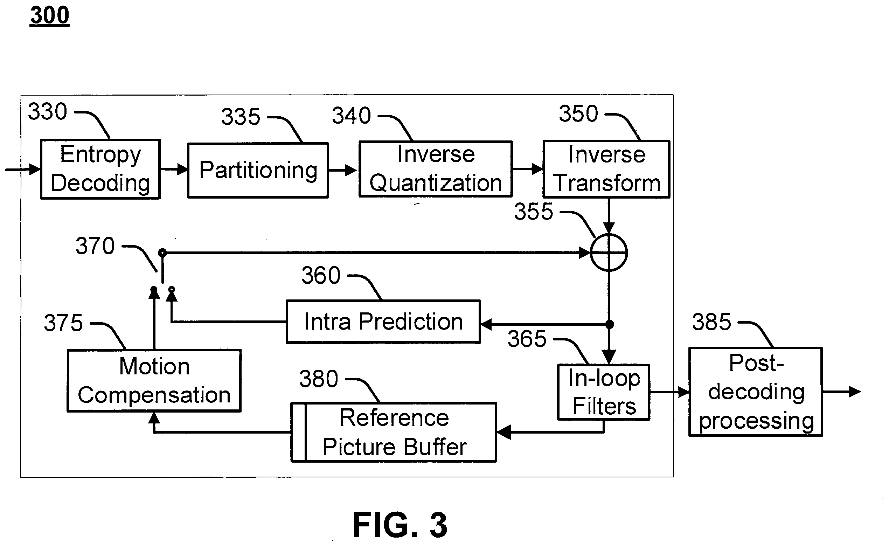

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as chroma format (e.g., 4:2:0, 4:2:2, 4:4:4), block sizes or coding unit sizes (e.g., height, width), partition dimensions, number of search areas, number of sub areas or regions, search step sizes, number of reconstructed blocks, number of entries in a list, precision, number of directions, number of modes, number of candidates, candidate ordering, number of samples, number of references, number of bits, bit values, sub-block sizes, number of parameters, multiplier values, constant values, range values, minimum values, maximum values, threshold values, index values, number of prediction modes, number of reference lines, index values, flag values, weight values, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, such as picture partitioning information, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filtering) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380). In some examples (e.g., for a given picture) the contents of the reference picture buffer 380 on the decoder 300 side may be identical to the contents of the reference picture buffer 280 on the encoder 200 side (e.g., for the same picture).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

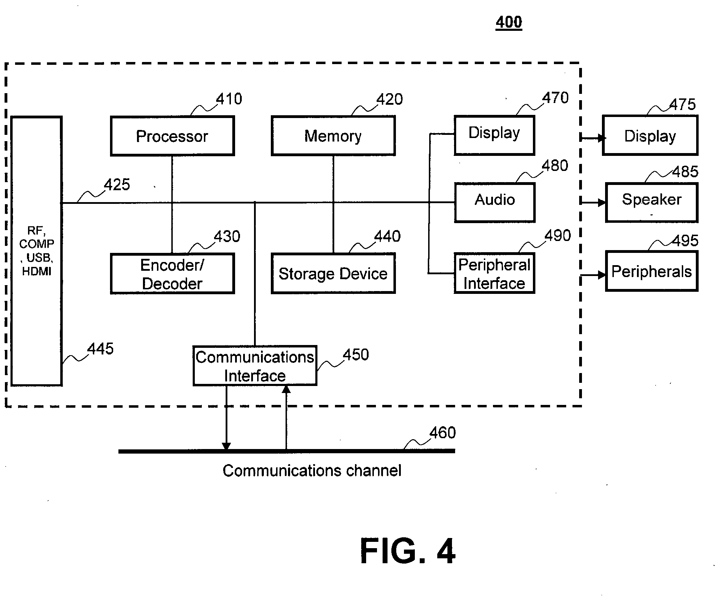

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device (e.g., connected glasses). The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, obtaining a picture (e.g., from an encoded data, e.g., in a bitstream); optionally, decoding the encoded data to obtain a decoded picture, obtaining encoded data in a bitstream comprising a moving picture experts group (MPEG) film grain characteristics supplemental enhancement information (SEI) message;; decoding the encoded data to obtain the MPEG film grain characteristics SEI message comprising an at least first style vector and a first set of parameters associated with the first style vector, wherein the first set of parameters comprises information about usage of the first style vector; obtaining a first parameter from the MPEG film grain characteristic SEI message, wherein the parameter indicates a type of film grain simulation model of type style vector-based synthesis and a first style vector associated with the film grain simulation model, wherein the first style vector indicates a style of film grain to be applied during film grain synthesis; generating the film grain on the picture (e.g., a decoded picture), wherein the film grain is generated using a film grain simulation model of the type of film grain simulation model indicated by the first parameter, and the first style vector associated with film grain simulation model; etc.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as fg_st_synthesis_model, fg_st_color_space_idc, fg_st_pre-processing_flag, flag fg_st_video_quality, fg_st_video_quality_metric, etc. are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, residual signals, supplemental enhancement information (SEI) message, metadata (e.g., style vector(s), parameter(s)), coding or motion representation modes and related signals (e.g., ITMP-related flags, LIC-related flags), partitioning modes, reference pictures, motion vector predictors (MVPs), motion vector differences (MVDs), indices, candidate lists, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

Feature(s) associated with the global video chain (e.g., production, encoding, transmission, decoding, rendering, etc.) are provided herein. Feature(s) associated with the analysis and synthesis of film grain are provided herein. The film grain may be removed (e.g., before encoding) and synthesized at (e.g., back at) the decoding stage (e.g., to reduce the bitrate). The following terms are used throughout this disclosure: film grain analysis, film grain synthesis, style vector, SEI signaling, metadata, video coding chain, deep learning.

Example inputs are provided herein.

Feature(s) associated with video compression are provided herein. Feature(s) described herein may provide signaling mechanisms to enable synthesis of film grain at the decoder side.

Film grain in film and photographs may result from (e.g., may originally result from) the photosensitive silver halide particles in film stock having a certain size and distribution. A type of film (e.g., each type of film) may have its own characteristics. Each type of film may produce a slightly different look. Film grain may be an attractive feature that introduces style and interest associated with movies. Digital cameras may not produce film grain. Film grain may be added to digitally-captured content (e.g., as a post-process). Film grain may be seen as a form of noise (e.g., a specific and visually attractive form of noise).

Film grain may be random in nature. The random nature of film grain may make it difficult or costly to compress using coding tools. Parameters of the encoding tools (e.g., such as those chosen for low bit rates) may remove film grain. High bitrates may be used (e.g., required) to keep and reconstruct film grain (e.g., with sufficient fidelity/quality). This may be contrary to the encoding/decoding goal of saving bits while encoding content. To overcome this encoder filtering issue, film grain may be modeled (e.g., may be required to be modeled, for example, before the encoding stage), it may then be removed and added back at the decoding stage (e.g., during a synthesis step).

Feature(s) associated with analyzing specific characteristics of film grain are provided herein. Feature(s) associated with synthesizing film grain (e.g., given specific characteristics provided as input) are provided herein.

In a video chain, to be able to synthesize back film grain at the decoder side, a parametric model of film grain may be used (e.g., required). The parametric model of film grain may correspond to the style of the grain to reconstruct. The style of some film grain present in a given content may be analyzed. The film grain may be synthesized back (e.g., as a film grain of the same style), for example, on the grain-free version of the original content. Film grain may also be modeled through the use of a style vector. The style vector may convey the characteristics of the film grain. The style vector may be used during synthesis (e.g., to ensure fidelity to the original grain). The style vector may be compact. The style vector may be easy to transmit (e.g., in the context of a video chain). The style vector may enable fidelity of the reconstruction against the different grain characteristics.

As used herein, a style vector may refer to a vector of a given dimension that includes the characteristics in terms of style of the film grain. Feature(s) described herein related to signaling mechanisms may enable synthesis grain from a transmission of an at least style vector and information related to the usage of the at least style vector for film grain synthesis.

Example signaling mechanisms for the transmission and use of a film grain style vector are described herein. Supplemental enhancement information (SEI) may be used for signaling information associated with film grain synthesis. Film grain modeling may be part of video coding standards. For example, the analysis and synthesis of film grain may be available in a compression standard.

FIG. 5 illustrates how and where the analysis and synthesis of film grain may be implemented. Information associated with film grain may be communicated as metadata (e.g., through an SEI message). In some examples, the SEI message may be a moving picture experts group (MPEG) film grain characteristics supplemental enhancement information (SEI) message.

FIG. 5 illustrates an example of film grain analysis and synthesis in the context of video encoding/decoding. The grain analysis may use (e.g., require) the original frame with grain and the corresponding filtered frame without film grain. This filtered frame may be obtained via a denoising operation. From the filtered frame, uniform regions may be extracted. The uniform regions may serve as a mask to estimate the grain parameters in the grain layer (e.g., computed as the difference between the original frame and its filtered version). In grain estimation, the extraction of uniform regions may be used (e.g.; may be critical) because edges and textures may affect the estimation of the film grain strength and pattern.

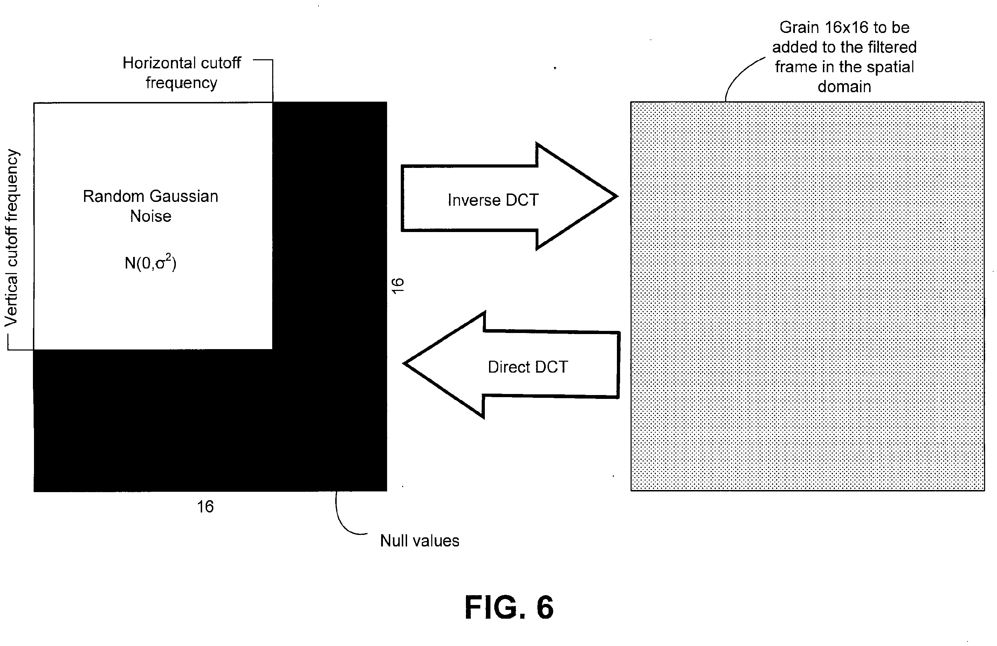

The grain model may be defined in the DCT domain of the Y channel (e.g., as depicted in FIG. 6). Y may represent the luminance channel.

FIG. 6 illustrates an example film grain model for a given Y intensity range. Blocks of 16x16 pixels may be used (e.g., considered). A 16x16 patch of grain in the Y spatial domain may follow a model based on a random Gaussian distribution in the DCT domain that is applied in (e.g., only in) a subpart of the 16x16 patch. The subpart of the patch may be defined through vertical/horizontal cut-off frequencies (e.g., defined in the DCT domain). The features (e.g., three features) that model the grain in the DCT domain may be the variance (e.g., $\sigma^2$) of the noise and cutoff frequencies (e.g., two cutoff frequencies) that limit the area where the noise is present. The cutoff frequencies may define the grain shape. If the cutoff frequencies are equal, the grain may be circular. The DC component may be set to a null value (e.g., to obtain a centered patch grain in the spatial domain).

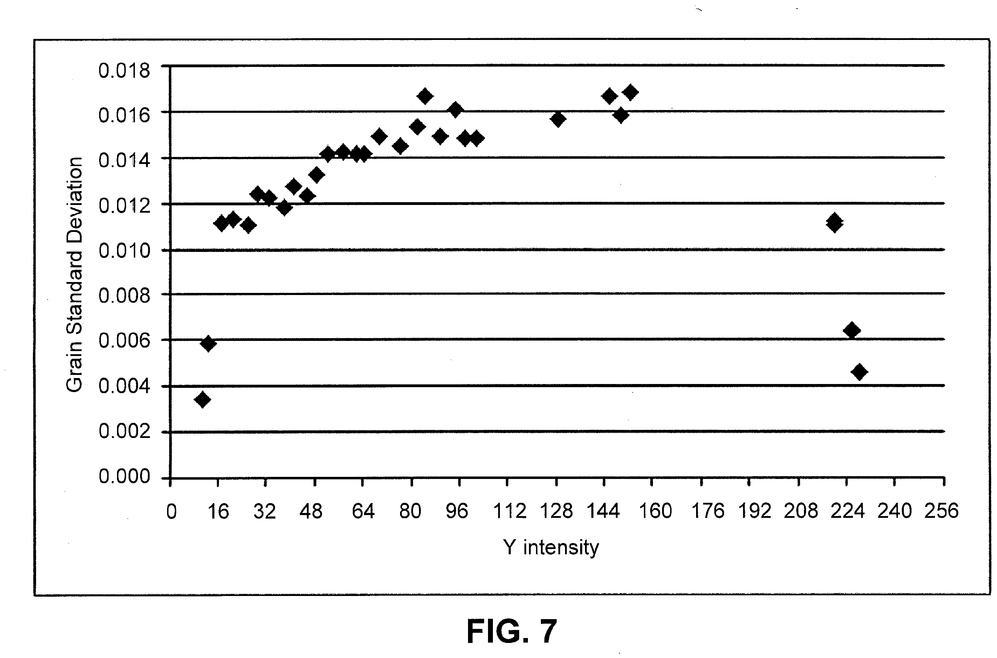

The variance value $\sigma^2$ may depend on the mean Y value of the patch to which the grain has to be added (e.g., thereby making the synthesis of film grain region dependent). FIG. 7 illustrates an example of the grain variance evolution with respect to the intensity level in the filtered Y layer. Cutoff frequency values may be (e.g., may be supposed to be) constant for a given shot.

FIG. 7 illustrates an example of variation of grain standard deviation versus Y intensity.

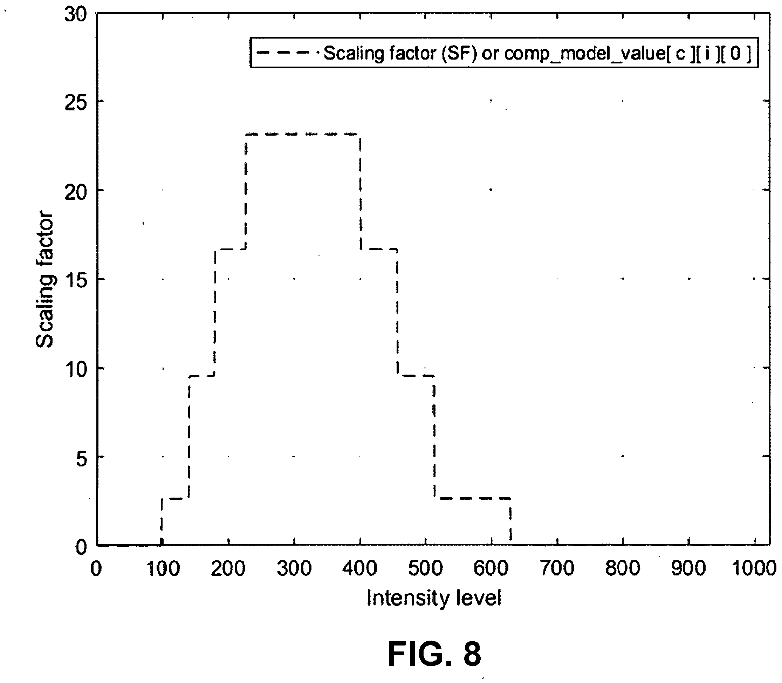

Film grain may be added/synthetized back (e.g., after the decoding of the signal, during a post processing stage). The noise/film grain may be inserted by applying a pattern/noise (e.g., unique for each camera), in plain images (e.g., with an intensity level that depends on the input signal). Different scaling factors may be applied to the film grain intensity (e.g., depending on the intensity of the content, as shown in FIG. 8). This intensity level may be a chosen constant for a given block in a given frame. Those blocks may be uniform. For example, the block may have the same size (e.g., 8x8).

Depending on the artistic look that is targeted, the film grain intensity may be made dependent on the texture present in the regions. For example, the more textured the regions are, the higher the film grain intensity may be.

FIG. 8 illustrates an example evolution of the scaling factor according to the intensity level.

The film grain pattern/template may be modeled with an autoregressive process and/or represented by a piecewise linear function (e.g., that includes the grain strength for each Y, Cb, Cr). At the decoding and re-noising stage, a $64 \times 64$ luma film grain template may be generated (e.g., using the film grain model from the bitstream). The film grain (e.g., a luma block of 32x32 extracted from the 64x64 film grain template) may be applied on a $32 \times 32$ luma block basis to reconstruct the picture with film grain. The film grain addition may be applied on the plain image. The block size may be fixed (e.g., not dynamically adapted to the region).

Film grain characteristics may be transmitted through an SEI message, for example, as defined in an example specification (e.g., registered by ISOIEC FDIS 23002-7) as described herein.

An SEI message may provide the decoder with a parametric model for film grain synthesis (e.g., through the parameters described herein). The following are some example parameters for film grain synthesis. fg_characteristics_cancel_flag may indicate whether or not the SEI message cancels the persistence of a film grain characteristics SEI message (e.g., any previous film grain characteristics SEI message) or that the film grain modelling information follows (e.g., from a previous film grain characteristics SEI message). fg_model_id may identify the film grain simulation model between frequency filtering or auto-regression. fg_separate_colour_description_present_flag may indicate whether a distinct combination of luma, bit depth, chroma bit depth, video full range flag, color primaries, transfer characteristics, and/or matrix coefficients for the film grain characteristics specified in the SEI message is present in the film grain characteristics SEI message syntax. fg_separate_colour_description_present_flag may indicate whether the combination of the above parameters is the same as indicated in video usability information (VUI) parameters for the coded layer video sequence (CLVS).

fg_bit_depth_luma_minus8 plus 8 may specify the bit depth used for the luma component of the film grain characteristics specified in the SEI message. fg_bit_depth_chroma_minus8 plus 8 may specify the bit depth used for the Cb and Cr components of the film grain characteristics specified in the SEI message.

fg_full_range_flag, fg_colour_primaries, and fg_transfer_characteristics, and fg_matrix_coeffs may have the same semantics, as described herein, for the vui_full_range_flag, the vui_colour_primaries, the vui_transfer_characteristics, the vui_matrix_coeffs syntax elements except as follows. fg_full_range_flag, fg_colour_primaries, fg_transfer_characteristics, and fg_matrix_coeffs may specify the video full range flag, the color primaries, the transfer characteristics, and the matrix coefficients, respectively, of the film grain characteristics specified in the SEI message (e.g., rather than those used for the CLVS).

If fg_full_range_flag is not present in the film grain characteristics SEI message, the value of fg_full_range_flag may be inferred to be equal to vui_full_range_flag. If fg_colour_primaries, is not present in the film grain characteristics SEI message, the value of fg_colour_primaries may be inferred to be equal to vui_colour_primaries. If fg_transfer_characteristics is not present in the film grain characteristics SEI message, the value of fg_transfer_characteristics may be inferred to be equal to vui_transfer_characteristics. If fg_matrix_coeffs is not present in the film grain characteristics SEI message, the value of fg_matrix_coeffs may be inferred to be equal to vui_matrix_coeffs.

fg_blending_mode_id may identify the blending mode used to blend the simulated film grain with the input images. The blending mode may be chosen between additive or multiplicative blending modes.

fg_log2_scale_factor may specify a scale factor used in the film grain characterization equations.

Setting fg_comp_model_present_flag[ c ] equal to 0 may indicate that film grain is not modelled on the c-th color component (e.g., where c equal to 0 refers to the luma component, c equal to 1 refers to the Cb component, and c equal to 2 refers to the Cr component). Setting fg_comp_model_present_flag[ c ] equal to 1 may indicate that syntax elements specifying modelling of film grain on color component c are present in the SEI message.

fg_num_intensity_intervals_minus1[ c ] plus 1 may specify the number of intensity intervals for which a specific set of model values has been estimated. The intensity intervals may overlap (e.g., to simulate multi-generational film grain).

fg_num_model_values_minus1[ c ] plus 1 may specify the number of model values present for an intensity interval (e.g., each intensity interval) in which the film grain has been modelled.

fg_intensity_interval_lower_bound[ c ][ i ] may specify the lower bound of the i-th intensity interval for which the set of model values applies.

fg_intensity_interval_upper_bound[ c ][ i] may specify the upper bound of the i-th intensity interval for which the set of model values applies.

The variable intensityIntervalIdx[ c ][ x ][ y ][ j ] may represent the j-th index to the list of intensities.

Intervals may be selected for the sample value $\varepsilon$ [ c ][ x ][ y ], for c = 0, ..., 2; x = 0, ..., PicWidthInLumaSamples - 1; y = 0, ..., PicHeightInLumaSamples - 1; and j = 0, ..., numApplicableIntensityIntervals[ c ][ x ][ y ] - 1 (e.g., where numApplicableIntensityIntervals[ c ][ x ][ y ] is the number of applicable intensity intervals for the sample value $\varepsilon$ [ c ][ x ][ y ] for c = 0, ..., 2; x = 0, ..., PicWidthInLumaSamples - 1; and y = 0, ..., PicHeightinLumaSamples - 1).

fg_comp_model_value[ c ][ i ][ j ] may specify the j-th model value for the color component c and the i-th intensity interval. The set of model values may have different meanings depending on the value of fg_model_id.

fg_characteristics_persistence_flag may specify the persistence of the film grain characteristics SEI message for the current layer. Setting fg_characteristics_persistence_flag equal to 0 may specify that the film grain characteristics SEI message applies to the current decoded picture (e.g., only the current decoded picture). Setting fg_characteristics_persistence_flag equal to 1 may specify that the film grain characteristics SEI message applies to the current decoded picture and persists for subsequent pictures (e.g., all subsequent pictures) of the current layer (e.g., in output order), for example, until one or more of the following conditions are true: a new CLVS of the current layer begins; the bitstream ends; and/or a picture in the current layer in an AU (e.g., associated with a film grain characteristics SEI message) is output that follows the current picture in output order.

Examples of metadata syntax and semantics are provided herein (e.g., in the shape of a Film Grain Characteristics SEI message). Syntax and semantics are described for the Film Grain Characteristics SEI message for film grain synthesis. An example of Film Grain Characteristics SEI message syntax and semantics is shown in Table 1.

Table 1: Example of film grain characteristics SEI message syntax and semantics

| film_grain_characteristics( payloadSize ) { | Descriptor |
|---|---|
| fg_characteristics_cancel_flag | u(1) |
| if( !fg_characteristics_cancel_flag ) { | |
| fg_model_id | u(2) |
| fg_separate_colour_description_present_flag | u(1) |
| if( fg_separate_colour_description_present_flag ) { | |
| fg_bit_depth_luma_minus8 | u(3) |
| fg_bit_depth_chroma_minus8 | u(3) |
| fg_full_range_flag | u(1) |
| fg_colour_primaries | u(8) |
| fg_transfer_characteristics | u(8) |
| fg_matrix_coeffs | u(8) |
| } | |
| fg_blending_mode_id | u(2) |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1 [ c ] | u(8) |
| fg_num_model_values_minus1[ c ] | u(3) |
| for( i = 0; i <= fg_num_intensity_intervals_minus1[ c ]; i++ ) { | |
| fg_intensity_interval_lower_bound[ c ][ i ] | u(8) |
| fg_intensity_interval_upper_bound[ c ][ i ] | u(8) |
| for( j = 0; j <= fg_num_model_values_minus1[ c ]; j++ ) | |
| fg_comp_model_value[ c ][ i ][ j ] | se(v) |
| } | |
| } | |
| fg_characteristics_persistence_flag | u(1) |
| } | |
| } | |

An SEI message may provide the decoder with a parameterized model for a film grain synthesis. The film grain synthesis process may be applied to the decoded pictures prior to their display.

For example, an encoder may use the film grain characteristics SEI message to characterize film grain that was present in the original source video material that may be removed by pre-processing filtering techniques. Synthesis of simulated film grain on the input images, which may be the decoded pictures or may be converted from the decoded pictures, for the display process may be optional and/or may not necessarily exactly follow the specified semantics of the film grain characteristics SEI message. When synthesis of simulated film grain on the input images for the display process is performed, there may not be a requirement that the method by which the synthesis is performed be the same as the parameterized model for the film grain as provided in the film grain characteristics SEI message.

Use of an SEI message may use (e.g., require) the definition of one or more of the following variables: A picture width and picture height in units of luma samples, may be denoted herein by PicWidthlnLumaSamples and PicHeightinLumaSamples, respectively. When the syntax element fg_separate_colour_description_present_flag of the film grain characteristics SEI message is equal to 0, the following additional variables may be provided: a chroma format indicator, denoted herein by ChromaFormatIdc, as described herein. A bit depth for the samples of the luma component, may be denoted herein by $BitDepth_Y$, and when ChromaFormatIdc is not equal to 0, a bit depth for the samples of the two associated chroma components, may be denoted herein by BitDepthc.

The film grain models specified in the film grain characteristics SEI message may be expressed for application to decoded pictures that have 4:4:4 colour format with luma and chroma bit depths corresponding to the luma and chroma bit depths of the film grain model and use the same colour representation domain as the identified film grain model. When the colour format of the decoded video is not 4:4:4 or the decoded video uses a different luma or chroma bit depth from that of the film grain model or uses a different colour representation domain from that of the identified film grain model, an unspecified conversion process is expected to be applied to convert the decoded pictures to the form that is expressed for application of the film grain model. Because the use of a specific method is not required for performing the film grain generation function used by the display process, a decoder could, if desired, down-convert the model information for chroma in order to simulate film grain for other chroma formats (4:2:0 or 4:2:2) rather than up-converting the decoded video (using a method not specified in this document) before performing film grain generation.

fg_characteristics_cancel_flag equal to 1 may indicate that the SEI message cancels the persistence of any previous film grain characteristics SEI message in output order that applies to the current layer. fg_characteristics_cancel_flag equal to 0 may indicate that film grain modelling information follows.

fg_model_id may identify the film grain simulation model as specified in Table 2. The value of fg_model_id shall be in the range of 0 to 1, inclusive. The values of 2 and 3 for fg_model_id are reserved for future use by ITU-T | ISO/IEC and shall not be present in bitstreams conforming to this edition of this document. Decoders shall ignore film grain characteristic SEI messages with fg_model_id equal to 2 or 3.

Table 2: fg_model_id values

| Value | Description |
|-------|-------------|
| 0 | Frequency filtering |
| 1 | Auto-regression |

fg_separate_colour_description_present_flag equal to 1 may indicate that a distinct combination of luma bit depth, chroma bit depth, video full range flag, colour primaries, transfer characteristics, and matrix coefficients for the film grain characteristics specified in the SEI message is present in the film grain characteristics SEI message syntax. fg_separate_colour_description_present_flag equal to 0 may indicate that the combination of luma bit depth, chroma bit depth, video full range flag, colour primaries, transfer characteristics, and matrix coefficients for the film grain characteristics specified in the SEI message are the same as indicated in VUI parameters for the CLVS.

When fg_separate_colour_description_present_flag is equal to 1, any of the luma bit depth, chroma bit depth, video full range flag, colour primaries, transfer characteristics, and matrix coefficients specified for the film grain characteristics specified in the SEI message may differ from that for the pictures in the CLVS.

When VUI parameters are not present for the CLVS or the value of vui_colour_description_present_flag is equal to 0, and equivalent information to that conveyed when vui_colour_description_present_flag is equal to 1 may not be conveyed by external means, fg_separate_colour_description_present_flag shall be equal to 1.

The input image Î, which may be the decoded picture or converted from the decoded picture, used in the equations in this subclause may be in the same colour representation domain as the simulated film grain signal. When any of these parameters differs from that for the pictures in CLVS, the input image Î used in the equations in this subclause may be in a different colour representation domain than that for the pictures in the CLVS. For example, when the value of fg_bit_depth_luma_minus8 + 8 is greater than $BitDepth_Y$ (i.e., the bit depth of the luma component of the pictures in the CLVS), the bit depth of the input image Î used in the equations in this subclause may be greater than $BitDepth_Y$. In such a case, the input image Î corresponding to an actual decoded picture may be generated by converting the actual decoded picture to be in the same colour representation domain as the simulated film grain signal. A process utilized for converting an actual decoded picture to the 4:4:4 colour format with same colour representation domain as the simulated film grain signal may be provided.

fg_bit_depth_luma_minus8 plus 8 may specify the bit depth used for the luma component of the film grain characteristics specified in the SEI message. When fg_bit_depth_luma_minus8 is not present in the film grain characteristics SEI message, the value of fg_bit_depth_luma_minus8 may be inferred to be equal to $BitDepth_Y$ - 8.

The value of fgBitDepth[ 0 ] is derived as follows:

$$\mathrm{fgBitDepth}[\,0\,] = \mathrm{fg\_bit\_depth\_luma\_minus8} + 8 \tag{19}$$

fg_bit_depth_chroma_minus8 plus 8 may specify the bit depth used for the Cb and Cr components of the film grain characteristics specified in the SEI message. When fg_bit_depth_chroma_minus8 is not present in the film grain characteristics SEI message, the value of fg_bit_depth_chroma_minus8 may be inferred to be equal to $BitDepth_C$ - 8.

The value of fgBitDepth[ c ] for c = 1 and 2 may be derived as follows:

$$\mathrm{fgBitDepth}[\,c\,] = \mathrm{fg\_bit\_depth\_chroma\_minus8} + 8, \text{ with } c = 1, 2 \tag{20}$$

fg_full_range_flag may have specific semantics similar to that of the vui_full_range_flag syntax element, except as follows: fg_full_range_flag specifies the video full range flag of the film grain characteristics specified in the SEI message, rather than the video full range flag used for the CLVS; and when fg_full_range_flag is not present in the film grain characteristics SEI message, the value of fg_full_range_flag is inferred to be equal to vui_full_range_flag.

fg_colour_primaries may have the semantics similar to that provided for the vui_colour_primaries syntax element, except as follows: fg_colour_primaries specifies the colour primaries of the film grain characteristics specified in the SEI message, rather than the colour primaries used for the CLVS; and when fg_colour_primaries is not present in the film grain characteristics SEI message, the value of fg_colour_primaries is inferred to be equal to vui_colour_primaries.

fg_transfer_characteristics may have the semantics similar to that provided for the vui_transfer_characteristics syntax element, except as follows: fg_transfer_characteristics specifies the transfer characteristics of the film grain characteristics specified in the SEI message, rather than the transfer characteristics used for the CLVS; and when fg_transfer_characteristics is not present in the film grain characteristics SEI message, the value of fg_transfer_characteristics is inferred to be equal to vui_transfer_characteristics.

fg_matrix_coeffs may have the semantics similar to that provided for the vui_matrix_coeffs syntax element, except as follows: fg_matrix_coeffs specifies the matrix coefficients of the film grain characteristics specified in the SEI message, rather than the matrix coefficients used for the CLVS; when fg_matrix_coeffs is not present in the film grain characteristics SEI message, the value of fg_matrix_coeffs is inferred to be equal to vui_matrix_coeffs; and the values allowed for fg_matrix_coeffs are not constrained by the chroma format of the decoded video pictures that is indicated by the value of ChromaFormatIdc for the semantics of the VUI parameters.

fg_blending_mode_id may identify the blending mode used to blend the simulated film grain with the input images as specified in Table 3. fg_blending_mode_id may be in the range of 0 to 1, inclusive. The values of 2 and 3 for fg_blending_mode_id may be reserved for future use by ITU-T | ISO/IEC and may not be present in bitstreams conforming to this edition of this document. In some examples, decoders may ignore film grain characteristic SEI messages with fg_blending_mode_id equal to 2 or 3.

Table 3: fg_blending_mode_id values

| Value | Description |
|-------|----------------|
| 0 | Additive |
| 1 | Multiplicative |

. Depending on the value of fg_blending_mode_id, the blending mode may be specified as follows:

- If fg_blending_mode_id is equal to 0, the blending mode is additive as specified by:

$$I_{\mathrm{grain}}[\,c\,][\,x\,][\,y\,] = \mathrm{Clip3}(\,0, (\,1 << \mathrm{fgBitDepth}[\,c\,]\,) - 1, \hat{I}[\,c\,][\,x\,][\,y\,] + G[\,c\,][\,x\,][\,y\,]\,) \tag{21}$$

- Otherwise (fg_blending_mode_id is equal to 1), the blending mode is multiplicative as specified by:

$$\begin{aligned} I_{\mathrm{grain}}[\,c\,][\,x\,][\,y\,] = \mathrm{Clip3}(\,0, (\,1 << \mathrm{fgBitDepth}[\,c\,]\,) - 1, \hat{I}[\,c\,][\,x\,][\,y\,] + \\ \mathrm{Round}(\,(\,\hat{I}[\,c\,][\,x\,][\,y\,] * G[\,c\,][\,x\,][\,y\,]\,) \div (\,(\,1 << \mathrm{fgBitDepth}[\,c\,]\,) - 1\,)\,)\,) \end{aligned} \tag{22}$$

where Î[ c ][ x ][ y ] represents the sample value at coordinates x, y of the colour component c of the input image Î, G[ c ][ x ][ y ] is the simulated film grain value at the same position and colour component, and fgBitDepth[ c ] is the number of bits used for each sample in a fixed-length unsigned binary representation of the arrays $I_{grain}$[ c ][ x ][ y ], Î[ c ][ x ][ y ], and G[ c ][ x ][ y ], where c = 0..2, x = 0..PicWidthinLumaSamples - 1, and y = 0..PicHeightinLumaSamples - 1.

fg_log2_scale_factor may specify a scale factor used in the film grain characterization equations.

fg_comp_model_present_flag[ c ] equal to 0 indicates that film grain is not modelled on the c-th colour component, where c equal to 0 refers to the luma component, c equal to 1 refers to the Cb component, and c equal to 2 refers to the Cr component. fg_comp_model_present_flag[ c ] equal to 1 may indicate that syntax elements specifying modelling of film grain on colour component c are present in the SEI message.

When fg_separate_colour_description_present_flag is equal to 0 and ChromaFormatIdc is equal to 0, the value of fg_comp_model_present_flag[1 ] and fg_comp_model_present_flag[2 ] may be equal to 0.

fg_num_intensity_intervals_minus1[ c ] plus 1 may specify the number of intensity intervals for which a specific set of model values has been estimated. The intensity intervals may overlap, for example, in order to simulate multi-generational film grain.

fg_num_model_values_minus1[ c ] plus 1 may specify the number of model values present for each intensity interval in which the film grain has been modelled. The value of fg_num_model_values_minus1[ c ] shall be in the range of 0 to 5, inclusive.

fg_intensity_interval_lower_bound[ c ][ i ] may specify the lower bound of the i-th intensity interval for which the set of model values applies. fg_intensity_interval_upper_bound[ c ][ i ] may specify the upper bound of the i-th intensity interval for which the set of model values applies.

The variable intensityIntervalIdx[ c ][ x ][y ][ j ] may represent the j-th index to the list of intensity intervals selected for the sample value Î[ c ][ x ][ y ] for c = 0..2, x = 0..PicWidthlnLumaSamples - 1, y = 0..PicHeightinLumaSamples - 1, and j = 0..numApplicableIntensityIntervals[c ][ x ][ y ] - 1, where numApplicableIntensityIntervals[ c ][ x ][ y ] is derived below.

Depending on the value of fg_model_id, the selection of the one or more intensity intervals for the sample value Î[ c ][ x ][ y ] may be specified as follows: the variable numApplicableIntensityIntervals[ c ][ x ][ y ] is initially set equal to 0.

- If fg_model_id is equal to 0, the following applies:
- The top-left sample location ( xB, yB) of the current 8x8 block b that contains the sample value Î[ c ][ x ][ y ] is derived as ( xB, yB ) = ( x /8, y / 8 ).
- The average value $b_{avg}$ of the current 8x8 block b is derived as follows:

$$
\begin{aligned}
&\text{sum8x8 = 0} \\
&\text{for( i = 0; i < 8; i++ )} \\
&\quad\text{for( j = 0; j < 8; j++ )} \hspace{4cm} (23)\\
&\qquad\text{sum8x8 += Î[ c ][ xB * 8 + i ][yB * 8 + j ]} \\
&b_{avg} = \text{Clip3( 0, 255, ( sum8x8 + ( 1 << ( fgBitDepth[ c ] − 3 ) ) ) >> ( fgBitDepth[ c ] − 2 ) )}
\end{aligned}
$$

- The value of intensityIntervalIdx[ c ][ x ][ y ][ j ] is derived as follows:

$$
\begin{aligned}
&\text{for( i = 0, j = 0; i <= fg\_num\_intensity\_intervals\_minus1[ c ]; i++ )} \\
&\quad\text{if( } b_{avg} \text{ >= fg\_intensity\_interval\_lower\_bound[ c ][ i ] \&\&} \\
&\qquad b_{avg} \text{ <= fg\_intensity\_interval\_upper\_bound[ c ][ i ] ) \{} \\
&\qquad\text{intensityIntervalIdx[ c ][ x ][ y ][ j ] = i} \hspace{2cm} (24)\\
&\qquad\text{j++} \\
&\quad\text{\}}
\end{aligned}
$$

numApplicableIntensityIntervals[ c ][ x ][ y ] = j
- Otherwise (fg_model_id is equal to 1), the value of intensityIntervalIdx[ c ][ x ][ y ][ j ] is derived as follows:

$I_8[ c ][ x ][ y ] = ( fgBitDepth[ c ] == 8 ) ? ( \hat{I}[ c ][ x ][ y ] :$
$\quad Clip3( 0, 255, ( \hat{I}[ c ][ x ][ y ] + ( 1 << ( fgBitDepth[ c ] - 9 ) ) ) ) >> ( fgBitDepth[ c ] - 8 ) )$
$for( i = 0, j = 0; i <= fg\_num\_intensity\_intervals\_minus1[ c ]; i++ )$
$\quad if( I_8[ c ][ x ][ y ] >= fg\_intensity\_interval\_lower\_bound[ c ][ i ] \&\&$
$\quad\quad I_8[ c ][ x ][ y ] <= fg\_intensity\_interval\_upper\_bound[ c ][ i ] ) \{$ (25)
$\quad\quad intensityIntervalIdx[ c ][ x ][ y ][ j ] = i$
$\quad\quad j++$
$\quad \}$
$numApplicableIntensityIntervals[ c ][ x ][ y ] = j$

Samples that do not fall into the defined intervals (i.e., those samples for which the value of numApplicable-IntensityIntervals[ c ][ x ][ y ] is equal to 0) may not be modified by the grain generation function. Samples that fall into more than one interval (i.e., those samples for which the value of numApplicableIntensityIntervals[ c ][ x ][ y ] is greater than 1) may originate multi-generation grain. Multi-generation grain may result from adding the grain computed independently for each of the applicable intensity intervals.

In the equations in the remainder of this subclause, the variable $s_j$ in each instance of the list fg_comp_model_value[ c ][ $s_j$ ] may be the value of intensityIntervalIdx[ c ][ x ][ y ][ j ] derived for the sample value $\hat{I}[ c ][ x ][ y ]$.

fg_comp_model_value[ c ][ i ][j] may specify the j-th model value for the colour component c and the i-th intensity interval. The set of model values has different meaning depending on the value of fg_model_id.

The value of fg_comp_model_value[ c ][ i ][ j ] may be constrained as follows and may be additionally constrained as specified: If fg_model_id is equal to 0, fg_comp_model_value[ c ][ i ][ j ] may be in the range of 0 to $2^{fgBitDepth[ c ]} - 1$, inclusive. Otherwise (fg_model_id is equal to 1), fg_comp_model_value[ c ][ i ][ j ] may be in the range of $-2^{( fgBitDepth[c]-1 )}$ to $2^{( fgBitDepth[ c ] - 1 )} - 1$, inclusive.

Depending on the value of fg_model_id, the synthesis of the film grain may be modelled as follows:

If fg_model_id is equal to 0, a frequency filtering model enables simulating the original film grain for c = 0..2, x = 0..PicWidthInLumaSamples - 1, and y = 0..PicHeightInLumaSamples - 1 as specified by:

-   If fg_model_id is equal to 0, a frequency filtering model enables simulating the original film grain for c = 0..2, x = 0..PicWidthInLumaSamples - 1, and y = 0..PicHeightInLumaSamples - 1 as specified by:

$G[ c ][ x ][ y ] = ( fg\_comp\_model\_value[ c ][ s_j ][ 0 ] * Q[ c ][ x ][ y ] + fg\_comp\_model\_value[ c ][ s_j ][5 ] * $ (26) $G[ c - 1 ][ x ][ y ] ) >> fg\_log2\_scale\_factor$

where Q[ c ] is a two-dimensional random process generated by filtering 16x16 blocks gaussRv with random-valued elements $gaussR_{Vij}$ generated with a normalized Gaussian distribution (independent and identically distributed Gaussian random variable samples with zero mean and unity variance) and where the value of an element G[ c - 1 ][ x ][ y ] used on the right-hand side of the equation is inferred to be equal to 0 when c - 1 is less than 0.

A normalized Gaussian random variable may be generated from two independent, uniformly distributed random values over the interval from 0 to 1 (and not equal to 0), denoted as $uRv_0$ and $uRv_1$, using the Box-Muller transformation specified by:

$$gaussRv_{i,j} = Sqrt( -2 * Ln( uRv_0 ) ) * Cos( 2 * \pi * uRv_1 )$$   (27)

where $\pi$ is Archimedes' constant 3.141 592 653 589 793....

The band-pass filtering of blocks gaussRv may be performed in the discrete cosine transform (DCT) domain as follows:

```
for( y = 0; y < 16; y++ )
    for( x = 0; x < 16; x++ )
        if( ( x < fg_comp_model_value[ c ][ sj ][3] && y <
fg_comp_model_value[ c ][ sj ][4]) ||
            x > fg_comp_model_value[ c ][ sj ][1] || y >
fg_comp_model_value[ c ][ sj ][2])
                gaussRv[ x ][ y ] = 0
    filteredRv = IDCT16x16( gaussRv )
```

(28)

where IDCT16x16( z ) refers to a unitary inverse discrete cosine transformation (IDCT) operating on a 16x16 matrix argument z as specified by:

$$IDCT16x16( z ) = r * z * r^T \qquad (29)$$

where the superscript T indicates a matrix transposition and r is the 16x16 matrix with elements $r_{ij}$ specified by:

$$r_{i,j} = \frac{(\,(\,i == 0\,)\,?\,1\,:\,Sqrt(\,2\,)}{4} * Cos\left( \frac{i * (\,2 * j + 1\,) * \pi}{32} \right) \qquad (30)$$

where $\pi$ is Archimedes' constant 3.141 592 653 589 793....

Q[ c ] may be formed by the frequency-filtered blocks filteredRv. Coded model values may be based on blocks of size 16x16. A decoder implementation may use other block sizes. For example, decoders implementing the IDCT on 8x8 blocks could down-convert by a factor of two the set of coded model values fg_comp_model_value[ c ][ $s_j$ ][ i ] for i equal to 1..4. To reduce the degree of visible blocks that result from mosaicking the frequency-filtered blocks filteredRv, decoders could apply a low-pass filter to the boundaries between frequency-filtered blocks. Otherwise (fg_model_id is equal to 1), an auto-regression model enables simulating the original film grain for c = 0..2, x = 0..PicWidthInLumaSamples - 1, and y = 0..PicHeightinLumaSamples - 1 as specified by:

$$
\begin{aligned}
G[ c ][ x ][ y ] = ( &fg\_comp\_model\_value[ c ][ sj ][ 0 ] * n[ c ][ x][ y ] + \\
&fg\_comp\_model\_value[ c ][ sj ][1] * ( G[ c ][ x - 1 ][ y ] + \\
&( ( fg\_comp\_model\_value[ c ][ sj ][4] * G[ c ][ x ][ y - 1 ] ) >> \\
&fg\_log2\_scale\_factor ) ) + fg\_comp\_model\_value[ c ][ sj ][3] * \\
&( ( fg\_comp\_model\_value[ c ][ sj ][4] * ( G[ c ][ x - 1 ][ y - 1 ] + \\
&\quad G[ c ][ x + 1 ][ y - 1 ] ) ) >> fg\_log2\_scale\_factor ) + \\
&fg\_comp\_model\_value[ c ][ sj ][5] * ( G[ c ][ x - 2 ][ y ] + \\
&\quad ( ( fg\_comp\_model\_value[ c ][ sj ][4] * fg\_comp\_model\_value[ c ][ sj ][4] * \\
&\quad G[ c ][ x ][ y - 2 ] ) >> ( 2 * fg\_log2\_scale\_factor ) ) ) + \\
&fg\_comp\_model\_value[ c ][ sj ][2] * G[ c - 1 ][ x ][ y ] ) >> fg\_log2\_scale\_factor
\end{aligned}
$$

(31)

where n[ c ][ x ][ y ] is a random value with normalized Gaussian distribution (independent and identically distributed Gaussian random variable samples with zero mean and unity variance for each value of c, x, and y) and where the value of an element G[ c ][ x ][ y ] used in the right-hand side of the equation is inferred to be equal to 0 when any of the following conditions are true:

- c is less than 0,
- x is less than 0,
- y is less than 0.

fg_comp_model_value[ c ][ i ][ 0 ] may provide the first model value for the model, for example, as specified by fg_model_id. fg_comp_model_value[ c ][ i ][ 0 ] may correspond to the standard deviation of the Gaussian noise term in the generation functions as specified herein in formulae 26 through 31.

fg_comp_model_value[ c ][ i ][1 ] may provide the second model value for the model as specified by fg_model_id. When fg_model_id is equal to 0, fg_comp_model_value[ c ][ i ][1 ] may be greater than or equal to 0 and less than 16.

When not present in the film grain characteristics SEI message, fg_comp_model_value[ c ][ i ][1 ] may be inferred as follows: if fg_model_id is equal to 0, fg_comp_model_value[ c ][ i ][1 ] is inferred to be equal to 8. Otherwise (fg_model_id is equal to 1), fg_comp_model_value[ c ][ i ][1 ] is inferred to be equal to 0.

fg_comp_model_value[ c ][ i ][1 ] may be interpreted as follows:

- If fg_model_id is equal to 0, fg_comp_model_value[ c ][ i ][1] may indicate the horizontal high cut frequency to be used to filter the DCT of a block of 16x16 random values.

- Otherwise (fg_model_id is equal to 1), fg_comp_model_value[ c ][ i ][1] indicates the first order spatial correlation for neighbouring samples ( x - 1, y ) and ( x, y - 1 ).

fg_comp_model_value[ c ][ i][2 ] may provide the third model value for the model, for example, . as specified by fg_model_id. When fg_model_id is equal to 0, fg_comp_model_value[ c ][ i ][2 ] shall be greater than or equal to 0 and less than 16.

When not present in the film grain characteristics SEI message, fg_comp_model_value[ c ][ i ][2 ] may be inferred as follows:

- If fg_model_id is equal to 0, fg_comp_model_value[ c ][ i ][2 ] may be inferred to be equal to fg_comp_model_value[ c ][ i ][1 ]

- Otherwise (fg_model_id is equal to 1), fg_comp_model_value[ c ][ i ][2 ] may be inferred to be equal to 0.

fg_comp_model_value[ c ][ i ][2 ] may be interpreted as follows:

- If fg_model_id is equal to 0, fg_comp_model_value[ c ][ i ][2 ] may indicate the vertical high cut frequency to be used to filter the DCT of a block of 16x16 random values.

- Otherwise (fg_model_id is equal to 1), fg_comp_model_value[ c ][ i ][2 ] may indicate the colour correlation between consecutive colour components.

fg_comp_model_value[ c ][ i ][3 ] may provide the fourth model value for the model, for example, as specified by fg_model_id. When fg_model_id is equal to 0, fg_comp_model_value[ c ][ i ][3 ] shall be greater than or equal to 0 and less than or equal to fg_comp_model_value[ c ][ i ][1 ].

When not present in the film grain characteristics SEI message, fg_comp_model_value[ c ][ i ][3 ] may be inferred to be equal to 0.

fg_comp_model_value[ c ][ i ][3 ] may be interpreted as follows:

- If fg_model_id is equal to 0, fg_comp_model_value[ c ][ i ][3 ] may indicate the horizontal low cut frequency to be used to filter the DCT of a block of 16x16 random values.
- Otherwise (fg_model_id is equal to 1), fg_comp_model_value[ c ][ i ][3 ] may indicate the first order spatial correlation for neighbouring samples ( x - 1, y - 1 ) and ( x + 1, y - 1 ).

fg_comp_model_value[ c ][ i ][4 ] may provide the fifth model value for the model as specified by fg_model_id. When fg_model_id is equal to 0, fg_comp_model_value[ c ][ i ][4 ] may be greater than or equal to 0 and less than or equal to fg_comp_model_value[ c ][ i ][2 ].

When not present in the film grain characteristics SEI message, fg_comp_model_value[ c ][ i ][4 ] may inferred to be equal to fg_model_id.

fg_comp_model_value[ c ][ i ][4 ] may be interpreted as follows:

- If fg_model_id is equal to 0, fg_comp_model_value[ c ][ i ][4 ] may indicate the vertical low cut frequency to be used to filter the DCT of a block of 16x16 random values.

- Otherwise (fg_model_id is equal to 1), fg_comp_model_value[ c ][ i ][4 ] may indicate the aspect ratio of the modelled grain.

fg_comp_model_value[ c ][ i ][5 ] may provide the sixth model value for the model, for example, as specified by fg_model_id.

When not present in the film grain characteristics SEI message, fg_comp_model_value[ c ][ i ][5 ] may be inferred to be equal to 0.

fg_comp_model_value[ c ][ i ][5 ] may be interpreted as follows:

- If fg_model_id is equal to 0, fg_comp_model_value[ c ][ i ][ 5 ] may indicate the colour correlation between consecutive colour components.

- Otherwise (fg_model_id is equal to 1), fg_comp_model_value[ c ][ i ][ 5 ] may indicate the second order spatial correlation for neighbouring samples ( x, y - 2 ) and ( x - 2, y ).

fg_characteristics_persistence_flag may specify the persistence of the film grain characteristics SEI message for the current layer.

fg_characteristics_persistence_flag equal to 0 may specify that the film grain characteristics SEI message applies to the current decoded picture only.

fg_characteristics_persistence_flag equal to 1 may specify that the film grain characteristics SEI message applies to the current decoded picture and persists for each of the subsequent pictures of the current layer in output order until one or more of the following conditions may be true: a new CLVS of the current layer may begins, or the bitstream ends, or a picture in the current layer in an AU associated with a film grain characteristics SEI message may be the output that follows the current picture in output order.

In another video coding technique, e.g., AV1, different metadata may be sent. For example, to reconstruct the film grain at the decoder side, the encoder/pre-processing module may send one or more of the following parameters to the decoder: lag value L (e.g., a value between 0 and 3 that defines the number of auto regressive coefficients used), auto regressive coefficients (e.g., $\{a_0, ..., a_n\}$), a set of points for a piece-wise linear scaling function for a color component (e.g., each color component), and/or values bCb , dCb, hCb , bCr , dCr , hCr (e.g., for a look-up table index of chroma components).

The values (e.g., all values) may be signaled as (e.g., quantized) integers. The values may take a relatively low amount of bandwidth (e.g., compared to the coded video, for example, at higher resolutions). The film grain parameters may be signaled for the highest (e.g., display) resolution of the reconstructed video frames, although the video coding technique may support varying frame resolution.

The parameters may take up to 145 bytes (e.g., including 64 bytes for scaling functions and 74 bytes for AR coefficients). The parameters may be signaled (e.g., once, until later updated, or for every frame, if necessary). Sending parameters for every frame may help to maintain temporal consistency (e.g., when film grain characteristics are changing gradually).

Another example specification is provided herein. A user data SEI message (e.g., registered by ITU-T Recommendation T.35) may be defined. The user data SEI message may be inefficient for the use case(s) described herein.

In an example, the already present encoding information, in some video coding techniques, may be used to synthesize film grain. For example, the level of intensity per region (e.g., which is needed to adapt the grain intensity) may come from the block partitioning. The level of intensity per region may be available (e.g., directly) from the DC(0,0) coefficient. Different flags or characteristics of the coding units (CUs) may give information on the level of texture present in each CU. For example, the flags and/or characteristics may indicate: the bit per pixel cost per CU; the CU block size; CBF for a (e.g., each) CU; and/or the like.

. The

Transmission of Film Grain Characteristics SEI message within the encoded bit-stream may be provided. Transmission of Film Grain Characteristics SEI message may include different metadata for film grain modeling and synthesis.

Feature(s) described herein may be (e.g., directly) embedded in the codecs. These features may be (e.g., may need to be) computationally inexpensive (e.g., at the expense of a low modeling capacity). Compression-oriented techniques may suffer from drawbacks (e.g., several additional drawbacks). For example, the accuracy of film grain modeling may be related to filtering and/or edge detection. In this case, insufficient filtering may cause the presence of grain in the denoised image. The grain image (e.g., the difference between the grainy and grain-free images) may not be representative of the true distribution and intensity of the grain.

Poor edge detection may result in biased scaling. Undetected edges may cause the textured blocks to be considered flat and homogeneous. In this case, the high frequency of the undetected edges may be mixed up with that of the grain. Considering homogeneous blocks (e.g., only homogeneous blocks) in the analysis may fail to address the grain properties in textured regions that are different (e.g., resulting in a less accurate synthesis). The grain properties supported by the film grain SEI message may be limited (e.g., resulting in a poor and limited diversity). As described herein, the transmitted information related to the grain characteristics may include: grain model type (e.g., filtering, auto-regressive), blending mode on original content (e.g., addition, multiplication), scale factor to apply on grain characteristics, distinction between colored grain or gray level grain, intensity intervals on which different grain intensity may be applied, scaling factors for content intensity intervals, and/or the like.

A film grain style vector may be generated, that may be further used for film grain synthesis. The style vector may offer one or more advantages (e.g., being compact and richer than other formats). The style vector may be modeled in a richer manner (e.g., with respect to the grain properties used by content creators). For example, film grain may be adapted in terms of size and pattern of the grain and/or in terms of intensity and color. The film grain may be content-dependent (e.g., because the film grain adapts to the local intensity, texture and saturation of the original content). Grain characteristics may be grouped in a style vector (e.g., a compact representation that is complex enough to include the properties of the grain). During analysis, the style vector may be generated by considering (e.g., exclusively considering) the grainy image. This may be different from other techniques with no pre-processing (e.g., denoising, edge detection).

During synthesis, the generated film grain may be adapted in terms of size and pattern of the grain and/or in terms of intensity and color. The film grain may be content-dependent (e.g., as it adapts to the local intensity, texture and saturation of the original content). The style vector may serve for the synthesis of film grain with high fidelity, high grain representation capacity and possibly content-dependency at the decoder side

Transmission of Film Grain Characteristics SEI message may include a style vector and information derived from this style vector that may be utilized for film grain modeling and synthesis.

Metadata (e.g., new metadata) related to the synthesis of film grain may be provided at the decoder side. The metadata may include a style vector that may contain in a compact yet rich manner all characteristics needed to define the style of film grain that is present in the original content.

Additional metadata may be provided that may guide the further use of the style vector at the decoder side in the Film Grain Characteristics SEI message, for film grain synthesis. The Film Grain Characteristics SEI message may provide information on one or more of the following: how to use and apply the style vector on a given content, how to aggregate several style vectors if any, how to preprocess them, which analysis model was used to generate the style vector(s), the style vector(s) sizes, and which synthesis model should be used to apply it on the content, or which quality is expected once film grain is synthesized. This information may be included in the bitstream at the encoder side. This information may be provided and specified as syntax elements in the Film Grain Characteristics SEI message. Such information may be utilized for film grain synthesis. At the decoder or receiver side, the decoder or the device may enable or not the use of the style vector. The decoder may also have a specific process that may be utilized for using or not the style vector to synthesize grain on the image.

The granularity of the signaled metadata may be based on: time (e.g., data is signaled per period/duration of the video content); temporal layers (e.g., data is signaled per temporal layer); slice type (e.g., intra and inter slices); parts of the picture (e.g., slices, tiles, sub-pictures); and/or the like.

The Film Grain Characteristics SEI message may be generated at the encoder (e.g., from information provided by the processing block responsible for the analysis of the film grain). The encoder may signal this information in the Film Grain Characteristics SEI message.

The Film Grain Characteristics SEI message may be decoded by the decoder. The decoded Film Grain Characteristics SEI message may be passed on to the processing block that will synthesize back film grain on the decoded content.

Feature(s) described herein may be applicable to the encoder and decoder. The encoder may signal film grain-related metadata into the bitstream. The decoder may decode the metadata.

Example signaling mechanisms for the transmission of metadata on how to synthesize film grain using a style vector in a Film Grain Characteristics SEI message for film grain synthesis may be provided. Table 4 shows an example of a modification of a Film Grain Characteristics SEI message that may be provided with accompanying metadata and may be used to perform the synthesis of film grain using a style vector.

Table 4 may illustrate an example of the modification of a Film Grain Characteristics SEI message for film grain synthesis to provide a style vector and the accompanying metadata that may be used to the synthesis of film grain through a style vector. In some examples, the style vector or the metadata (e.g., some or (e.g., all) metadata) may be sent globally for the (e.g., full) bitstream, e.g., so that the style vector and the metadata may be shared for frames of the decoded video. The style vector or the metadata may be (e.g., additionally and/or alternatively) shared in a period. The concept of a period may correspond, for example, to a picture, an Intra period, a Group of Pictures (GOP), a number of pictures, a time duration, and/or for all. An SEI message may be (e.g., typically) inserted per period. The Film Grain Characteristics SEI message may be transmitted, for example, at the start of an upcoming period. The next message including the style vector or the metadata may be transmitted at the start of the next upcoming period. Therefore, a message may be transmitted for a (e.g., each) picture, for example, if/when the upcoming period is a picture.

In some examples, an upcoming period may be a specified time interval or a specified number of pictures. An associated message (e.g., for a period specified as a time interval or number of pictures) may be transmitted, for example, with a (e.g., the first) picture in the time interval or with a (e.g., the first) picture in the specified number of pictures. In another embodiment, part of the information can be sent globally for the full bitstream (e.g., information related to the aggregation model used to merge several style vectors, dimension of the style vectors in case it is identical for all style vectors in the bitstream,) and other information can be sent with a different periodicity, e.g., for each picture.

In examples, metadata may include one or more of the following (e.g., as shown in an example message Table 4):

fg_st_aggregation_model may indicate which type of aggregation models may be used to aggregate the different style vectors, e.g., before using them to synthesize film grain on the decoded picture. For example, two or more style vectors can be added in a bitwise manner, to generate another style vector that may be used to synthesize film grain on the picture or the decoded picture. fg_st_vector_size may indicate the dimension of the transmitted style vectors. fg_st_vector_number may indicate the number of style vectors that may be included in the metadata. In examples, more than one style vector may be sent. The style vectors may be applied (e.g., successively) on the decoded content during (e.g., successive) syntheses. The different style vectors may be used in the order defined by their number i. In some examples, one or more style vectors may be defined per part of an image, e.g., where multiple (e.g., several) style vectors may (e.g., need to) be defined. fg_st_vector[ i ] may represent a style vector for a given film grain style to be applied to the decoded picture. fg_st_weight[ i ] may represent the weight associated with a given style vector to be applied in the aggregation model. fg_st_analysis_model_idc[ i ] may indicate which type of analysis model was used to generate the style vector of index i. fg_st_analysis_mode_idc may indicate whether analysis neural network information may be included in the SEI message or not. fg_st_analysis_alignment_zero_bit_a may be equal to zero (0). fg_st_analysis_tag_uri may include a tag URI with syntax and/or semantics as specified, for example, in IETF RFC 4151 identifying the format and/or associated information about the neural network that may be used as analysis model, e.g., if/when fg_st_analysis_model_idc may indicate that the analysis model is deep learning based. fg_st_analysis_uri may include a URI with syntax and/or semantics as specified, for example, in IETF Internet Standard 66 identifying the neural network used as an analysis model. fg_st_synthesis_model_idc[ i ] may indicate which type of synthesis model may be used to synthesize grain on the decoded content from the style vector of index i. fg_st_synthesis_mode_idc may indicate whether synthesis neural network information may be included in the SEI message or not. fg_st_synthesis_alignment_zero_bit_a may be equal to zero (0). fg_st_synthesis_tag_uri may include a tag URI with syntax and/or semantics as specified, for example, in IETF RFC 1451 identifying the format and associated information about the neural network that may be used as a synthesis model, e.g., if/when fg_st_synthesis_model_idc may indicate that the synthesis model is deep learning based. fg_st_synthesis_uri may include a URI with syntax and/or semantics, for example, in IETF Internet Standard 66 identifying the neural network that may be used as synthesis model. fg_st_blending_flag[ i ] may indicate whether a blending may be used (e.g., is necessary) to apply the generated grain after the use of the synthesis model. If true, the type of blending mode may be provided. fg_st_blending_mode_idc[ i ] may identify the blending mode that may be used to blend the simulated film grain with the input images. The blending mode may be chosen between additive or multiplicative blending modes. fg_st_comp_idc[ i ] may indicate on which components of the decoded image the grain may be blended. fg_st_color_space_idc[ i ] may indicate the color space to which the decoded picture may be converted, e.g., before being used as input to the synthesis module. fg_st_preprocessing_flag[ i ] may indicate whether preprocessing may be performed on the style vector before applying the style vector on the decoded image. fg_st_preprocessing_type_idc[ i ] may indicate which type of preprocessing may be applied. fg_st_video_quality[ i ] may indicate for a given film grain synthesized using the current style vector the corresponding quality that may be expected after blending the film grain on the decoded image. fg_st_video_quality[ i ] may be, for example, PSNR, SSIM, LPIPS, or JSD-NSS values. fg_st_video_quality_metric[i] may specify the quality metric to interpret the value in fg_st_video_quality[i]. fg_st_scaling_factor_idc[ i ] may specify which scaling may be applied to the Style Vector of index i , e.g., before being used as input to the synthesis module.

Table 4 illustrates an example syntax of an SEI message that may be provided with accompanying metadata for synthesis of film grain through a style vector.

Table 4: Example syntax of an SEI message that may be provided with accompanying metadata for synthesis of film grain through a style vector

| film_grain_characteristics( payloadSize ) { | Descriptor |
|---|---|
|    fg_characteristics_cancel_flag | u(1) |
|    if( !fg_characteristics_cancel_flag ) { | |
|       fg_model_id | u(2) |
|       fg_separate_colour_description_present_flag | u(1) |
|       if( fg_separate_colour_description_present_flag ) { | |
|          fg_bit_depth_luma_minus8 | u(3) |
|          fg_bit_depth_chroma_minus8 | u(3) |
|       fg_full_range_flag | u(1) |
|       fg_colour_primaries | u(8) |
|       fg_transfer_characteristics | u(8) |

(continued)

| | |
|---|---|
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1[ c ] | u(8) |
| fg_num_model_values_minus1[ c ] | u(3) |
| for( i = 0; i <= fg_num_intensity_intervals_minus1 [ c ]; i++ ) { | |
| fg_intensity_interval_lower_bound[ c ][ i ] | u(8) |
| fg_intensity_interval_upper_bound[ c ][ i ] | u(8) |
| for(j = 0; j <= fg_num_model_values_minus1[ c ]; j++ ) | |
| fg_comp_model_value[ c ][ i ][j] | se(v) |
| } | |
| } | |
| } else { | |
| fg_st_aggregation_model | u(4) |
| fg_st_global_flag | u(1) |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][j] | u(8) |
| } | |
| if (fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| if ( !fg_st_global_flag ) or ( i ==0 ) { | |
| fg_st_analysis_model_idc[ i ] | u(4) |
| if(fg_st_analysis_model_idc[ i ] == 2 && fg_st_analysis_mode_idc = = 1 ){ | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |

(continued)

| | |
|---|---|
| fg_st_synthesis_model_idc[ i ] | u(4) |
| if(fg_st_synthesis_model_idc[ i ] == 2 && fg_st_synthesis_mode_idc = = 1 ){ | |
|   while( !byte_aligned( ) ) | |
|     fg_st_synthesis_alignment_zero_bit_a | u(1) |
|   fg_st_synthesis_tag_uri | st(v) |
|   fg_st_synthesis_uri | st(v) |
| } | |
| if ( fg_blending_mode_id != 2 ) { | |
|   fg_st_comp_idc[ i ] | u(4) |
| } | |
| fg_st_color_space_idc[ i ] | u(4) |
| fg_st_preprocessing_flag[ i ] | u(1) |
| if ( fg_st_preprocessing_flag[ i ] ){ | |
|   fg_st_preprocessing_type_idc[ i ] | u(4) |
|   if ( fg_st_preprocessing_type_idc[ i ] == 0 ){ | |
|     fg_st_scaling_factor[ i ] | u(4) |
|   } | |
| } | |
|   } | |
| } | |
| fg_characteristics_persistence_flag | u(1) |
| } | |
| } | |

In some examples, other ways may be used to define or reference the analysis and synthesis models (e.g., if the models are deep neural networks). For example, an explicit label value per deep model may be used for the metadata fg_st_analysis_model_idc[ i ] or fg_st_synthesis_model_idc[ i ].

In some examples, a style vector may include (e.g., all) characteristics that may (e.g., be necessary to fully) describe the style of film grain to be synthesized, e.g., its shape, size, relationship with the content intensity, saturation, texture, etc. In some examples, a style vector may include a (e.g., one) characteristic, or a (e.g., one) subset of the characteristics that may (e.g., be needed to) describe the film grain to be synthesized. Another style vector (e.g., carried within the same SEI or in another SEI) may include another characteristic or set of characteristics.

In some examples, the existing semantics for the current Film Grain Characteristics SEI message for film grain synthesis, in some video coding techniques, may be modified. In some examples, fg_model_id may identify the film grain simulation model as specified in Table 5. The value of fg_model_id shall be in the range of 0 to 2, inclusive. The value of 3 for fg_model_id may be reserved for future use by ITU-T | ISO/IEC. Decoders may ignore film grain characteristic SEI messages with fg_model_id equal to 3. In case fg_model_id equals to 2, the Film Grain Characteristics SEI message may specify that the film grain simulation model shall use one or several style vectors as input and that the information carried in the SEI message is related to a or several style vectors, which may define the style of film grain to be applied during film grain synthesis.

Table 5: fg_model_id values

| Value | Description |
|---|---|
| 0 | Frequency filtering |
| 1 | Auto-regression |

(continued)

| Value | Description |
|---|---|
| 2 | Style vector-based model |

fg_blending_mode_id may identify the blending mode used to blend the simulated film grain with the input images as specified in Table 6. fg_blending_mode_id may be in the range of 0 to 2, inclusive. The value of 3 for fg_blending_mode_id may be reserved for future use by ITU-T | ISO/IEC. Decoders may ignore film grain characteristic SEI messages with fg_blending_mode_id equal to 3.

Table 6: fg_blending_mode_id values

| Value | Description |
|---|---|
| 0 | Additive |
| 1 | Multiplicative |
| 2 | None |

Depending on the value of fg_blending_mode_id, the blending mode may be specified as follows:

- If fg_blending_mode_id is equal to 0, the blending mode is additive as specified by:

$$I_{grain}[\,c\,][\,x\,][\,y\,] = Clip3(\,0,\,(\,1 << fgBitDepth[\,c\,]\,) - 1,\,\hat{I}[\,c\,][\,x\,][\,y\,] + G[\,c\,][\,x\,][\,y\,]\,) \qquad (32)$$

- Otherwise (fg_blending_mode_id is equal to 1), the blending mode is multiplicative as specified by:

$$I_{grain}[\,c\,][\,x\,][\,y\,] = Clip3(\,0,\,(\,1 << fgBitDepth[\,c\,]\,) - 1,\,\hat{I}[\,c\,][\,x\,][\,y\,] + \\ Round(\,(\,\hat{I}[\,c\,][\,x\,][\,y\,] * G[\,c\,][\,x\,][\,y\,]\,) \div (\,(\,1 << fgBitDepth[\,c\,]\,) - 1\,)\,)\,) \qquad (33)$$

where $\hat{I}[\,c\,][\,x\,][\,y\,]$ represents the sample value at coordinates x, y of the colour component c of the input image $\hat{I}$, $G[\,c\,][\,x\,][\,y\,]$ is the simulated film grain value at the same position and colour component, and fgBitDepth[ c ] is the number of bits used for each sample in a fixed-length unsigned binary representation of the arrays $I_{grain}[\,c\,][\,x\,][\,y\,]$, $\hat{I}[\,c\,][\,x\,][\,y\,]$, and $G[\,c\,][\,x\,][\,y\,]$, where c = 0..2, x = 0..PicWidthInLumaSamples - 1, and y = 0..PicHeightInLumaSamples - 1.

In some examples where fg_blending_mode_id equal to 2, no blending mode may blend the film grain on the picture to be displayed. This may happen when the picture is used as input to the synthesized film grain model and the already blended picture is output by the model.

In some examples, style vectors may be applied to parts of picture. In the case where the periodicity of the SEI messages corresponds to parts of the pictures, some additional metadata may be added that may define to which region of the decoded picture, film grain corresponding to each style vector it should be applied. The syntax as provided in Table 7 may be utilized, for example:

Table 7: the proposed syntax ith bounding box coordinates.

| film_grain_characteristics( payloadSize ) { | Descriptor |
|---|---|
|   fg_characteristics_cancel_flag | u(1) |
|   if( !fg_characteristics_cancel_flag ) { | |
|     fg_model_id | u(2) |
|     fg_separate_colour_description_present_flag | u(1) |
|     if( fg_separate_colour_description_present_flag ) { | |
|       fg_bit_depth_luma_minus8 | u(3) |
|       fg_bit_depth_chroma_minus8 | u(3) |
|       fg_full_range_flag | u(1) |
|       fg_colour_primaries | u(8) |

(continued)

| | |
|---|---|
| fg_transfer_characteristics | u(8) |
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1 [ c ] | u(8) |
| fg_num_model_values_minus1[ c ] | u(3) |
| for( i = 0; i <= fg_num_intensity_intervals_minus1[ c ]; i++ ) { | |
| fg_intensity_interval_lower_bound[ c ][ i ] | u(8) |
| fg_intensity_interval_upper_bound[ c ][ i ] | u(8) |
| for( j = 0; j <= fg_num_model_values_minus1[ c ]; j++ ) | |
| fg_comp_model_value[ c ][ i ][ j ] | se(v) |
| } | |
| } | |
| } else { | |
| fg_st_aggregation_model | u(4) |
| fg_st_global flag | u(1) |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| if (fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| if ( !fg_st_global_flag ) or ( i ==0 ) { | |
| fg_st_analysis_model_idc[ i ] | u(4) |
| if(fg_st_analysis_model_idc[ i ] == 2 && fg_st_analysis_mode_idc = = 1 ) { | |
| while( !byte_aligned( ) ) | |
| fg_st_analysis_alignment_zero_bit_a | u(1) |
| fg_st_analysis_tag_uri | st(v) |
| fg_st_analysis_uri | st(v) |

(continued)

| | |
|---|---|
| } | |
| fg_st_synthesis_model_idc[ i ] | u(4) |
| if(fg_st_synthesis_model_idc[ i ] == 2 && fg_st_synthesis_mode_idc = = 1 ) { | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| if ( fg_blending_mode_id != 2 ) { | |
| fg_st_comp_idc[ i ] | u(4) |
| } | |
| fg_st_color_space_idc[ i ] | u(4) |
| fg_st_preprocessing_flag[ i ] | u(1) |
| if ( fg_st_preprocessing_flag[ i ] ){ | |
| fg_st_preprocessing_type_idc[ i ] | u(4) |
| if ( fg_st_preprocessing_type_idc[ i ] == 0 ){ | |
| fg_st_scaling_factor[ i ] | u(4) |
| } | |
| } | |
| } | |
| fg_st_box_xstart[ i ] | u(8) |
| fg_st_box_xend[ i ] | u(8) |
| fg_st_box_width[ i ] | u(8) |
| fg_st_box_height[ i ] | u(8) |
| fg_st_boundary_blending_flag. | u(1) |
| if (fg_st_boundary_blending_flag == 1){ | |
| fg_st_boundary_blending_mode_idc[ i ] | u(4) |
| } | |
| }. | |
| fg_characteristics_persistence_flag | u(1) |
| } | |
| } | |

In some examples, metadata fg_st_box_xstart, fg_st_box_ystart, fg_st_box_width, fg_st_box_height may be provided to define respectively the x coordinate, y coordinate of the video top left corner, width and height of the bounding box defining the region of the decoded picture to apply the film grain defined by the style vector of index i. In this case, additional metadata may be added in the syntax to define if a filtering should be used at the boundaries of the regions to smooth the transition from one region and grain style to another. This may act as a transition from one grain style region to another for which no film grain style is applied.
fg_st_boundary_blending_flag[ i ] may specify whether such a filtering is to be applied (fg_st_boundary_blending_flag equal 0) or not (fg_st_boundary_blending_flag equal 1).
In examples, fg_st_boundary_blending_mode_idc[ i ] may specify the type of filtering to be applied between regions with different style vectors. For example, fg_st_boundary_blending_mode_idc[ i ] equal to zero (0) may specify that the boundary blending mode to use is a low pass filter-based blending mode. For example, fg_st_boundary_blending_mode_idc[ i ] equal to one (1) may specify the boundary blending mode to use is of a proprietary user defined type. An example of the boundary blending mode is shown in Table 8:

Table 8: Example interpretation of boundary blending mode fg_st_boundary_blending_idc[ i ]

| fg_st_boundary_blending_mode_idc[ i ] | Blending mode to use to blend the boundary between two regions with different style vectors |
|---|---|
| 0 | Low pass filter |
| 1 | User defined |
| 2..15 | Reserved for future uses |

In some examples, metadata (e.g., additional metadata) may (e.g., be added to) specify the width of a low pass filter that may be applied at the boundary of a (e.g., each) region.

In some examples, a Gaussian filter may be used to blend the boundaries between (e.g., two) different regions with different styles of synthesized film grain. Metadata (e.g., additional metadata) may (e.g., be added to) define the parameters of the Gaussian filter to be used.

Style vectors may have different sizes. For example, different analyzers may be used to generate the style vectors. The style vectors may have different sizes. An example of the syntax to indicate style vectors with different sizes is shown in Table 9:

Table 9: Example syntax to indicate style vectors with different sizes

| film_grain_characteristics( payloadSize ) { | Descriptor |
|---|---|
|   fg_characteristics_cancel_flag | u(1) |
|   if( !fg_characteristics_cancel_flag ) { | |
|     fg_model_id | u(2) |
|     fg_separate_colour_description_present_flag | u(1) |
|     if( fg_separate_colour_description_present_flag ) { | |
|       fg_bit_depth_luma_minus8 | u(3) |
|       fg_bit_depth_chroma_minus8 | u(3) |
|       fg_full_range_flag | u(1) |
|       fg_colour_primaries | u(8) |
|       fg_transfer_characteristics | u(8) |
|       fg_matrix_coeffs | u(8) |
|     } | |
|     fg_blending_mode_id | u(2) |
|     if (fg_model_id != 2) { | |
|       fg_log2_scale_factor | u(4) |
|     for( c = 0; c < 3; c++ ) | |
|       fg_comp_model_present_flag[ c ] | u(1) |
|     for( c = 0; c < 3; c++ ) | |
|       if( fg_comp_model_present_flag[ c ] ) { | |
|         fg_num_intensity_intervals_minus1[ c ] | u(8) |
|         fg_num_model_values_minus1[ c ] | u(3) |
|         for( i = 0; i <= fg_num_intensity_intervals_minus1[ c ]; i++ ) { | |
|           fg_intensity_interval_lower_bound[ c ][ i ] | u(8) |

(continued)

| | |
|---|---|
| fg_intensity_interval_upper_bound[ c ][ i ] | u(8) |
| for( j = 0; j <= fg_num_model_values_minus1[ c ]; j++ ) | |
| fg_comp_model_value[ c ][ i ][ j ] | se(v) |
| } | |
| } | |
| } else { | |
| fg_st_aggregation_model | u(4) |
| fg_st_global_flag | u(1) |
| fg_st_vector_number | u(4) |
| for ( i=0;i<fg_st_vector_number;i++ ) { | |
| fg_st_vector_size[i] | u(4) |
| for ( j=0; j < fg_st_vector_size; j++){ | |
| fg_st_vector[ i ][ j ] | u(8) |
| } | |
| if (fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| if ( (!fg_st_global_flag ) or ( i ==0 ) { | |
| fg_st_analysis_model_idc[ i ] | u(4) |
| if(fg_st_analysis_model_idc[ i ] == 2 && fg_st_analysis_mode_idc = = 1 ){ | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |
| fg_st_synthesis_model_idc[ i ] | u(4) |
| if(fg_st_synthesis_model_idc[ i ] == 2 && fg_st_synthesis_mode_idc = = 1){ | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| if ( fg_blending_mode_id != 2 ) { | |
| fg_st_comp_idc[ i ] | u(4) |
| } | |
| fg_st_color_space_idc[ i ] | u(4) |
| fg_st_preprocessing_flag[ i ] | u(1) |
| if ( fg_st_preprocessing_flag[ i ] ){ | |

(continued)

| | |
|---|---|
| fg_st_preprocessing_type_idc[ i ] | u(4) |
| if ( fg_st_preprocessing_type_idc[ i ] == 0 ){ | |
| fg_st_scaling_factor[ i ] | u(4) |
| } | |
| } | |
| } | |
| } | |
| fg_characteristics_persistence_flag | u(1) |
| } | |
| } | |

In some examples, one SEI message may be sent per style vector. An example of the syntax to send one SEI message per style vector is shown in Table 10:

Table 10: Example of syntax to send one SEI message per style vector

| film_grain_characteristics( payloadSize ) { | Descriptor |
|---|---|
| fg_characteristics_cancel_flag | u(1) |
| if( !fg_characteristics_cancel_flag ) { | |
| -fg_model_id | u(2) |
| fg_separate_colour_description_present_flag | u(1) |
| if( fg_separate_colour_description_present_flag ) { | |
| fg_bit_depth_luma_minus8 | u(3) |
| fg_bit_depth_chroma_minus8 | u(3) |
| fg_full_range_flag | u(1) |
| fg_colour_primaries | u(8) |
| fg_transfer_characteristics | u(8) |
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1[ c ] | u(8) |
| fg_num_model_values_minus1[ c ] | u(3) |
| for( i = 0; i <= fg_num_intensity_intervals_minus1[ c ]; i++ ) { | |
| fg_intensity_interval_lower_bound[ c ][ i ] | u(8) |
| fg_intensity_interval_upper_bound[ c ][ i ] | u(8) |
| for( j = 0; j <= fg_num_model_values_minus1 [ c ]; j++ ) | |

(continued)

| | |
|---|---|
| fg_comp_model_value[ c ][ i ][ j ] | se(v) |
| } | |
| } | |
| } else { | |
| fg_st_aggregation_model | u(4) |
| fg_st_vector_size | u(4) |
| for ( j=0; j < fg_st_vector_size; j++){ | |
| fg_st_vector[ i ][ j ] | u(8) |
| } | |
| if (fg_st_aggregation_model == 2) { | |
| fg_st_weight | u(4) |
| } | |
| fg_st_video_quality | u(8) |
| fg_st_video_quality_metric | u(4) |
| fg_st_analysis_model_idc | u(4) |
| if(fg_st_analysis_model_idc == 2 && fg_st_analysis_mode_idc = = 1 ) { | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |
| fg_st_synthesis_model_idc | u(4) |
| if(fg_st_synthesis_model_idc == 2 && fg_st_synthesis_mode_idc = = 1 ) { | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| if ( fg_blending_mode_id != 2 ) { | |
| fg_st_comp_idc | u(4) |
| } | |
| fg_st_color_space_idc | |
| fg_st_preprocessing_flag | u(1) |
| if ( fg_st_preprocessing_flag ){ | |
| fg_st_preprocessing_type_idc | u(4) |
| if ( fg_st_preprocessing_type_idc[ i ] == 0 ){ | |
| fg_st_scaling_factor[ i ] | u(4) |
| } | |
| } | |
| fg_characteristics_persistence_flag | u(1) |

(continued)

| | |
|---|---|
| } | |
| } | |

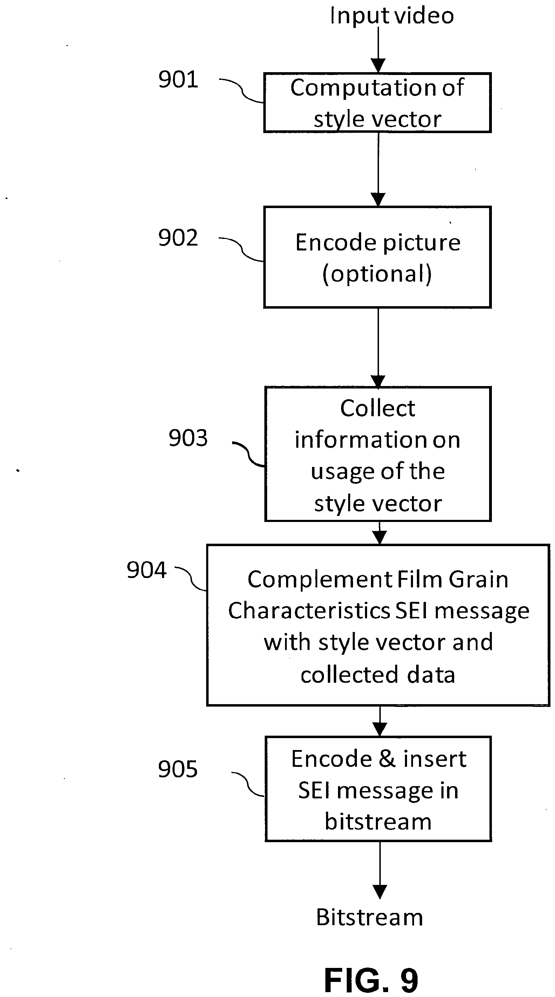

In some examples, the metadata fg_st_global_flag, fg_st_vector_number may not be used/needed. The encoding process may be implemented, for example, similar to the process shown in FIG. 9.

In some examples, the fg_st_global_flag may not be used. For example, (e.g., all) metadata may be sent for (e.g., all) style vectors in fg_st_vector_number. An example of the syntax (e.g., sending style vectors in fg_st_vector_number) is shown in Table 11:

Table 11: Example syntax to send style vectors in fg_st_vector_number

| film_grain_characteristics( payloadSize ) { | Descriptor |
|---|---|
| fg_characteristics_cancel_flag | u(1) |
| if( !fg_characteristics_cancel_flag ) { | |
| fg_model_id | u(2) |
| fg_separate_colour_description_present_flag | u(1) |
| if( fg_separate_colour_description_present_flag ) { | |
| fg_bit_depth_luma_minus8 | u(3) |
| fg_bit_depth_chroma_minus8 | u(3) |
| fg_full_range_flag | u(1) |
| fg_colour_primaries | u(8) |
| fg_transfer_characteristics | u(8) |
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1[ c ] | u(8) |
| fg_num_model_values_minus1[ c ] | u(3) |
| for( i = 0; i <= fg_num_intensity_intervals_minus1[ c ]; i++ ) { | |
| fg_intensity_interval_lower_bound[ c ][ i ] | u(8) |
| fg_intensity_interval_upper_bound[ c ][ i ] | u(8) |
| for( j = 0; j <= fg_num_model_values_minus1 [ c ]; j++ ) | |
| fg_comp_model_value[ c ][ i ][ j ] | se(v) |
| } | |
| } | |
| } else { | |
| fg_st_aggregation_model | u(4) |
| fg_st_vector_size | u(4) |

(continued)

| | |
|---|---|
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| if (fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| fg_st_analysis_model_idc[ i ] | u(4) |
| if(fg_st_analysis_model_idc[ i ] == 2 && fg_st_analysis_mode_idc = = 1 ) { | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |
| fg_st_synthesis_model_idc[ i ] | u(4) |
| if(fg_st_synthesis_model_idc[ i ] == 2 && fg_st_synthesis_mode_idc = = 1 ) { | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| fg_st_blending_flag[ i ] | u(1) |
| if ( fg_st_blending_flag [ i ] ) { | |
| fg_st_blending_mode_idc[ i ] | u(4) |
| fg_st_comp_idc[ i ] | u(4) |
| } | |
| fg_st_color_space_idc[ i ] | u(4) |
| fg_st_preprocessing_flag[ i ] | u(1) |
| if ( fg_st_preprocessing_flag[ i ] ){ | |
| fg_st_preprocessing_type_idc[ i ] | u(4) |
| if ( fg_st_preprocessing_type_idc[ i ] == 0 ){ | |
| fg_st_scaling_factor[ i ] | u(4) |
| } | |
| } | |
| } | |
| fg_characteristics_persistence_flag | u(1) |
| } | |

(continued)

| | |
|---|---|
| } | |

In some examples, (e.g., only) the style vector(s) may be sent. For example, a default mode may be defined, e.g., with one or more default values. There may be persistence of the values for a bitstream (e.g., the whole bitstream). A default mode may have, for example, one or more of the following default values:

```
fg_st_aggregation_model = 0
fg_st_vector_size = 8
fg_st_global_flag = 1
fg_st_analysis_model_idc[i] = 0
fg_st_synthesis_model_idc[i] = 0
fg_st_blending_mode_idc[i] = 0
fg_st_comp_idc[i] = 0
fg_st_color_space_idc[i] = 0
fg_st_preprocessing_flag[i] = 0
fg_st__preprocessing_type_idc[i] = 0
fg_st_weigh[i] = 1/fg_st_vector_number
fg_st_video_quality[i] = 0.01
fg st video_quality_metric[i] = 0x02 (LPIPS)
fg_st_scaling_factor_idc[i] = 0
```

An example of syntax to send (e.g., only) the style vector(s) is shown in Table 12:

Table 12: Example of syntax to send (e.g., only) the style vector(s).

| film_grain_characteristics( payloadSize ) { | Descriptor |
|---|---|
| fg_characteristics_cancel_flag | u(1) |
| if( !fg_characteristics_cancel_flag ) { | |
| fg_model_id | u(2) |
| fg_separate_colour_description_present_flag | u(1) |
| if( fg_separate_colour_description_present_flag ) { | |
| fg_bit_depth_luma_minus8 | u(3) |
| fg_bit_depth_chroma_minus8 | u(3) |
| fg_full_range_flag | u(1) |
| fg_colour_primaries | u(8) |
| fg_transfer_characteristics | u(8) |
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1[ c ] | u(8) |
| fg_num_model_values_minus1[ c ] | u(3) |
| for( i = 0; i <= fg_num_intensity_intervals_minus1[ c ]; i++ ) { | |

(continued)

| | |
|---|---|
| fg_intensity_interval_lower_bound[ c ][ i ] | u(8) |
| fg_intensity_interval_upper_bound[ c ][ i ] | u(8) |
| for( j = 0; j <= fg_num_model_values_minus1[ c ]; j++ ) | |
| fg_comp_model_value[ c ][ i ][ j ] | se(v) |
| } | |
| } | |
| } else { | |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| } | |
| fg_characteristics_persistence_flag | u(1) |
| } | |
| } | |

In some examples, the vector size(s) may be sent with the vectors. In some examples, the aggregation model may be set (e.g., to one (1)), for example, by default, or may be sent with the style vectors.

In some examples, a (e.g., one single) bitfield may be used. For example, a single bitfield (e.g., fg_st_flags) may be used to convey multiple (e.g., several) information flags. The meaning of each bit in the bitfield fg_st_flags is summarized in Table 13. For example, bit 0 may indicate whether all the following information data in the message have to be redefined for each Style vector or not. It may correspond to the previously defined fg_st_global_flag. bit 1 may indicate whether preprocessing is required before using the Style Vector as input to the synthesis module. It corresponds to the previously defined fg_st_preprocessing_flag. bit 2 may indicate that the Style Vector should be applied to a region of the primary video. This region is defined respectively by the x, y coordinates_of the top left corner and the width and height of the region bounding box. It corresponds to a new fg_st_box_flag. bit 3 may indicate that the Style Vectors should be aggregated together before being applied to the image. It may correspond to a new fg_st_aggregation_mode_flag. Bits 4-8 may be reserved for future use.

Table 13: fg_st_flags description

| bit 4-8 | bit 3 | bit 2 | bit 1 | bit 0 |
|---|---|---|---|---|
| Future use | fg_st_aggreg ation_mode_ flag | fg_st_box_flag | fg_st_preprocessing_flag | fg_st_global_flag |

The fg_st_flags flag may allow a reduction in the size of the SEI message, for example, by not sending metadata information that may not be needed to use the Style Vector. In this case, the syntax is shown in Table 14:

Table 14: Example syntax of using single bitfield fg_st_flags

| film_grain_characteristics( payloadSize ) { | Descriptor |
|---|---|
| fg_characteristics_cancel_flag | u(1) |
| if( !fg_characteristics_cancel_flag ) { | |
| fg_model_id | u(2) |
| fg_separate_colour_description_present_flag | u(1) |
| if( fg_separate_colour_description_present_flag ) { | |
| fg_bit_depth_luma_minus8 | u(3) |

(continued)

| | |
|---|---|
| fg_bit_depth_chroma_minus8 | u(3) |
| fg_full_range_flag | u(1) |
| fg_colour_primaries | u(8) |
| fg_transfer_characteristics | u(8) |
| fg_matrix_coeffs | u(8) |
| } | |
| fg_blending_mode_id | u(2) |
| if (fg_model_id != 2) { | |
| fg_log2_scale_factor | u(4) |
| for( c = 0; c < 3; c++ ) | |
| fg_comp_model_present_flag[ c ] | u(1) |
| for( c = 0; c < 3; c++ ) | |
| if( fg_comp_model_present_flag[ c ] ) { | |
| fg_num_intensity_intervals_minus1[ c ] | u(8) |
| fg_num_model_values_minus1 [ c ] | u(3) |
| for( i = 0; i <= fg_num_intensity_intervals_minus1[ c ]; i++ ) { | |
| fg_intensity_interval_lower_bound[ c ][ i ] | u(8) |
| fg_intensity_interval_upper_bound[ c ][ i ] | u(8) |
| for( j = 0; j <= fg_num_model_values_minus1[ c ]; j++ ) | |
| fg_comp_model_value[ c ][ i ][ j ] | se(v) |
| } | |
| } | |
| } else { | |
| fg_st_flag | u(1) |
| if ( fg_st_flags && 0x08 == 0x08) { | |
| fg_st_aggregation_model | u(4) |
| } | |
| fg_st_vector_size | u(4) |
| fg_st_vector_number | u(4) |
| for ( i=0;i<fg_st_vector_number;i++ ) { | |
| for ( j=0; j < fg_st_vector_size; j++){ | |
| fg_st_vector[ i ][ j ] | u(8) |
| } | |
| if (fg_st_flags && 0x08 == 0x08 and fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| if ( fg_st_flags && 0x01 != 0x01 ) or ( i == 0 ) { | |
| fg_st_analysis_model_idc[ i ] | u(4) |

(continued)

| | |
|---|---|
| if(fg_st_analysis_model_idc[ i ] == 2 && fg_st_analysis_mode_idc = = 1 ) { | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |
| fg_st_synthesis_model_idc[ i ] | u(4) |
| if(fg_st_synthesis_model_idc[ i ] == 2 && fg_st_synthesis_mode_idc = = 1 ) { | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| if(fg_st_synthesis_model_idc[ i ] == 2 && fg_st_synthesis_mode_idc = = 1){ | |
| if (fg_st_flags && 0x04 == 0x04 ) { | |
| fg_st_blending_mode_idc[ i ] | u(4) |
| fg_st_comp_idc[ i ] | u(4) |
| } | |
| fg_st_color_space_idc[ i ] | u(4) |
| if ( fg_st_flags && 0x02 == 0x02 ){ | |
| fg_st_preprocessing_type_idc[ i ] | u(4) |
| if ( fg_st_preprocessing_type_idc[ i ] == 0 ){ | |
| fg_st_scaling_factor[ i ] | u(4) |
| } | |
| } | |
| } | |
| if ( fg_st_flags && 0x04 == 0x04 ){ | |
| fg_st_box_xstart[ i ] | u(8) |
| fg_st_box_xend[ i ] | u(8) |
| fg_st_box_width[ i ] | u(8) |
| fg_st_box_height[ i ] | u(8) |
| } | |
| } | |
| fg_characteristics_persistence_flag | u(1) |
| } | |
| } | |

In some examples, which may be applied to other scenarios described herein, the syntax relative to the Film Grain Style Vector (for example, as indicated in Table 4, Table 7, Table 9, Table 10, Table 11, Table 12, Table 14) may be added at the end of the current Film Grain Characteristics SEI message and the fields fg_log2_scale_factor and fg_comp_model_present_flag may have the following values: fg_log2_scale_factor may be set to 1, for example, to not have effect in the film grain characterization equations; and/or fg_comp_model_present_flag[ c ], for c in the range 0..2, may be equal to 0 to indicate that syntax elements specifying modelling of film grain on luma and colour components are not present in the SEI message.

Table 15

| film_grain_characteristics( payloadSize ) { | Descriptor |
|---|---|
| fg_characteristics_cancel_flag | u(1) |
| if( !fg_characteristics_cancel_flag ) { | |
|   fg_model_id | u(2) |
|   fg_separate_colour_description_present_flag | u(1) |
|   if( fg_separate_colour_description_present_flag ) { | |
|     fg_bit_depth_luma_minus8 | u(3) |
|     fg_bit_depth_chroma_minus8 | u(3) |
|     fg_full_range_flag | u(1) |
|     fg_colour_primaries | u(8) |
|     fg_transfer_characteristics | u(8) |
|     fg_matrix_coeffs | u(8) |
|   } | |
|   fg_blending_mode_id | u(2) |
|   fg_log2_scale_factor | u(4) |
|   for( c = 0; c < 3; c++ ) | |
|     fg_comp_model_present_flag[ c ] | u(1) |
|   for( c = 0; c < 3; c++ ) | |
|     if( fg_comp_model_present_flag[ c ] ) { | |
|       fg_num_intensity_intervals_minus1[ c ] | u(8) |
|       fg_num_model_values_minus1[ c ] | u(3) |
|       for( i = 0; i <= fg_num_intensity_intervals_minus1[ c ]; i++ ) { | |
|         fg_intensity_interval_lower_bound[ c ][ i ] | u(8) |
|         fg_intensity_interval_upper_bound[ c ][ i ] | u(8) |
|         for( j = 0; j <= fg_num_model_values_minus1[ c ]; j++ ) | |
|           fg_comp_model_value[ c ][ i ][ j ] | se(v) |
|         } | |
|       } | |
|     fg_characteristics_persistence_flag | u(1) |
|   } | |
|   if (fg_model_id == 2) { | |
|     fg_st_aggregation_model | u(4) |
|     fg_st_global_flag | u(1) |
|     fg_st_vector_size | u(4) |
|     fg_st_vector_number | u(4) |
|     for ( i=0;i<fg_st_vector_number;i++ ) { | |
|       for ( j=0; j < fg_st_vector_size; j++){ | |
|         fg_st_vector[ i ][ j ] | u(8) |

(continued)

| | |
|---|---|
| } | |
| if (fg_st_aggregation_model == 2) { | |
| fg_st_weight[ i ] | u(4) |
| } | |
| fg_st_video_quality[ i ] | u(8) |
| fg_st_video_quality_metric[ i ] | u(4) |
| if ( !fg_st_global_flag ) or ( i ==0 ) { | |
| fg_st_analysis_model_idc[ i ] | u(4) |
| if(fg_st_analysis_model_idc[ i ] == 2 && fg_st_analysis_mode_idc = = 1 ) { | |
| while( !byte_aligned( ) ) | |
| fg_st_analysis_alignment_zero_bit_a | u(1) |
| fg_st_analysis_tag_uri | st(v) |
| fg_st_analysis_uri | st(v) |
| } | |
| fg_st_synthesis_model_idc[ i ] | u(4) |
| if(fg_st_synthesis_model_idc[ i ] == 2 && fg_st_synthesis_mode_idc = = 1){ | |
| while( !byte_aligned( ) ) | |
| fg_st_synthesis_alignment_zero_bit_a | u(1) |
| fg_st_synthesis_tag_uri | st(v) |
| fg_st_synthesis_uri | st(v) |
| } | |
| if ( fg_blending_mode_id != 2 ) { | |
| fg_st_comp_idc[ i ] | u(4) |
| } | |
| fg_st_color_space_idc[ i ] | u(4) |
| fg_st_preprocessing_flag[ i] | u(1) |
| if ( fg_st_preprocessing_flag[ i ] ){ | |
| fg_st_preprocessing_type_idc[ i ] | u(4) |
| if ( fg_st_preprocessing_type_idc[ i ] == 0 ){ | |
| fg_st_scaling_factor[ i ] | u(4) |
| } | |
| } | |
| } | |
| } | |
| } | |
| } | |

In some examples, a film grain mask may be transmitted under the form of an auxiliary picture. For example, a mask defining where the film grain may be applied may be transmitted as an auxiliary picture. The auxiliary picture may be, for example, a (e.g., new) type of auxiliary picture or an auxiliary picture of type alpha. The auxiliary picture may be mapped to the metadata related to the film grain that may be defined in the SEI message. The mapping may be performed, for example, through the use of (e.g., additional) metadata (e.g., as described herein). In examples, there may be a (e.g., only one) mask for (e.g., all) potential style vectors. In some examples, there may be a (e.g., one) mask defined per style vector.

In examples, metadata may include one or more of the following:

fg_st_layer_id[ i ] may specify the identifier of the decoder Layer for the Film Grain Mask of index i. fg_st_ols_number [ i ] may specify the number of Output Layer Sets in which the decoder layer for the Film Grain Mask of index i belongs to.

fg_st_ols_id[ i ][ j ] may specify the identifier of the Output Layer Set for the Film Grain Mask of index i. The identifier may be used to associate the film grain information to the Film Grain Mask sample values of the decoded auxiliary picture of index i.

The style vector may (e.g., itself) include spatial information on where the style vector may be applied. In some examples, the spatial information may not be included in the style vector, such that the mask may be used (e.g., responsible) for conveying the spatial information. In some examples (e.g., after the grain analysis), the picture may be used in another composed image, e.g., a logo was added on the original image. The film grain may not be applied on the added logo. The mask may (e.g., therefore) be used to convey information about the logo location (e.g., through binary information).

Metadata may include, for example, one or more of the following indications: fg_st_cancel_flag equal to one (1) may indicate that the SEI message cancels the persistence of a (e.g., any) previous Film Grain Style Vector Information SEI message in output order. fg_st_cancel_flag equal to one (1) may reset the use of a style vector, e.g., no more film grain synthesis may be performed. fg_st_cancel_flag equal to zero (0) may indicate that Film Grain Style Vector Information parameters follow. fg_st_vector_number may specify the number of Style Vectors in the CVS. fg_st_global_flag equal to zero (0) may indicate that fg_st_analysis_model_idc[ i ], fg_st_synthesis_model_idc[ i ], fg_st_blending_flag[ i ], fg_st_blending_mode_idc[ i ], fg_st_comp_idc[ i ], fg_st_color_space_idc[ i ], fg_st_disentangle_flag[ i ], fg_st_preprocessing_flag[ i ], fg_st_preprocessing_type_idc[ i ], and/or fg_st_scaling_factor_idc[ i ] for i=0.. fg_st_vector_number, may be present. fg_st_global_flag equal to one (1) may indicate that (e.g., only) fg_st_analysis_model_idc[ 0 ], fg_st_synthesis_model_idc[ 0 ], fg_st_blending_flag[ 0 ], fg_st_blending_mode_idc[ 0 ], fg_st_comp_idc[ 0 ], fg_st_color_space_idc [ 0 ],, fg_st_preprocessing_flag[ 0], fg_st_preprocessing_type_idc[ 0], fg_st_scaling_factor_idc[ 0 ]may be present.fg_st_aggregation_model may specify the model that may be used to aggregate a set of style vector(s) (e.g., one or more in the set) to generate a (e.g., one single) aggregated style vector, e.g., before using the aggregated style vector as input of the Film Grain Synthesis model.

An example of bit value descriptions (e.g., definition/interpretation) for fg_st_aggregation_model is shown in Table 16. As shown in Table 10: fg_st_aggregation_model equal to zero (0) may specify that no aggregation of the Style Vectors should be done and that the style vectors should be used in the order corresponding to their respective indices if they correspond to the same picture or part of a picture. fg_st_aggregation_model equal to one (1) may specify that (e.g., all) Style Vectors may be added (e.g., in a bitwise manner) provided that they have the same size. Style Vectors of the same sizes (e.g., only style vectors of the same sizes) may be aggregated, for example, if different vector sizes are present. The aggregated Style Vectors may (e.g., then) be used in the order corresponding to the lowest indices of the Style Vectors in a (e.g., each) aggregation. fg_st_aggregation_model equal to two (2) may specify that a weighted bitwise addition of (e.g., all) Style Vectors may be performed. Style vectors of the same sizes (e.g., only Style Vectors of the same sizes) may be aggregated, for example, if different vector sizes are present. The aggregated Style Vectors may (e.g., then) be used in the order corresponding to the lowest indices of the Style Vectors in a (e.g., each) aggregation. fg_st_aggregation_model equal to three (3) may specify, for example, that a proprietary user defined process may be used to aggregate the Style Vectors.

Table 16: Example Interpretation of fg_st_aggregation_model

| fg_st_aggregation_model | Style Vector aggregation process |
| --- | --- |
| 0 | No aggregation |
| 1 | Bitwise addition |
| 2 | Weighted bitwise addition |
| 3 | User defined |
| 4..15 | Reserved for future uses |

In examples (e.g., if the aggregation model indicates a Style Vector aggregation model of type weighted bitwise addition), (e.g., additional) weights may be sent to indicate (e.g., inform) how to process to the weighted bitwise sum of the style vectors. The weights may include, for example, one or more of the following: fg_st_weight[ i ] may specify the weight to be used in the weighted bitwise sum of style vectors for style vector of index i. fg_st_vector_size may specify the size of the Style Vector(s) in number of bits. fg_st_vector[ i ] may specify the Style Vector of index i and of size fg_st_vector_size, which may indicate the style characteristics of the Film Grain Style that may be synthesized on the corresponding decoded picture. . fg_st_analysis_model_idc[i] may specify the type of analysis model that may have been used to generate the Style Vector of index i. An example definition/interpretation of fg_st_analysis_model_idc[ i ] is shown in Table 17. As shown in Table 17: fg_st_analysis_model_idc[i] equal to zero (0) may specify that the analysis model used is a frequency filtering-based model. fg_st_analysis_model_idc[i] equal to one (1) may specify that the analysis model used is an autoregressive model. fg_st_analysis_model_idc[i] equal to two (2) may specify that the analysis model used is a deep learning-based model. fg_st_analysis_model_idc[i] equal to three (3) may specify that the analysis model used corresponds to a proprietary user defined process.

Table 17: Example definition/interpretation of fg_st_analysis_model_idc[ i ]

| fg_st_analysis_model_idc[ i ] | Type of analysis model used to generate the Style Vector(s) |
|---|---|
| 0 | Filtering based |
| 1 | Autoregressive |
| 2 | Deep learning based |
| 3 | User defined |
| 4..15 | Reserved for future uses |

fg_st_analysis_mode_idc, e.g., if/when equal to zero (0), may indicate that the neural network information may be included in the SEI message, and the neural network information may be in a specified or known format in the bitstream. fg_st_analysis_mode_idc, e.g., if/when equal to one (1), may indicate that the neural network information is identified by the URI indicated by fg_st_analysis_uri with the format identified by the tag URI fg_st_analysis_tag_uri. The value of fg_st_analysis_mode_idc may be in the range of 0 to 255, inclusive. Values of 2 to 255, inclusive, for fg_st_analysis_mode_idc may be reserved for future use (e.g., may not be present in bitstreams until in use). For example, decoders may ignore SEI messages with fg_st_analysis_mode_idc in the range of 2 to 255, inclusive. fg_st_analysis_alignment_zero_bit_a may be equal to zero (0). fg_st_analysis_tag_uri may include a tag URI with syntax and semantics identifying the format and/or associated information about the neural network used as an analysis model, e.g., if/when fg_st_analysis_model_idc indicates an analysis model of type deep learning based (e.g., is equal to two (2)). fg_st_analysis_tag_uri may enable (e.g., uniquely) identifying the format of neural network data specified by fg_st_analysis_uri without a central registration authority. fg_st_analysis_tag_uri equal to "tag:iso.org,2023:15938-17" may indicate, for example, that the neural network data identified by fg_st_analysis_uri conforms to a specific configuration. fg_st_analysis_uri may include a URI with syntax and semantics identifying the neural network that may be used as an analysis model. fg_st_synthesis_model_idc[i] may specify the type of synthesis model that may be used to generate Film Grain on the decoded picture according to the Style Vector of index i.

An example definition/interpretation of fg_st_synthesis_model_idc[ i ] is shown in Table 18. As shown in Table 18: fg_st_synthesis_model_idc[i] equal to zero (0) may specify that the synthesis model to be used corresponds to the frequency filtering-based model. fg_st_synthesis_model_idc[i] equal to one (1) may specify that the analysis model used corresponds to the autoregressive model. fg_st_synthesis_model_idc[i] equal to two (2) may specify that the synthesis model to be used is a deep learning-based model. fg_st_synthesis_model_idc[i] equal to three (3) may specify that the analysis model used corresponds to a proprietary user defined process.

Table 18: Example definition/interpretation of fg_st_synthesis_model_idc[ i ]

| fg_st_synthesis_model_idc[ i ] | Type of synthesis model to be used to generate the Film Grain from the Style Vector of index i |
|---|---|
| 0 | Filtering based |
| 1 | Autoregressive |
| 2 | Deep learning based |
| 3 | User defined |
| 4..15 | Reserved for future uses |

fg_st_synthesis_mode_idc, e.g., if/when equal to zero (0), may indicate that the neural network information may be included in the SEI message and/or that the neural network information may be in the format of a specified or known bitstream. fg_st_synthesis_mode_idc equal to one (1) may indicate that the neural network information is identified by the URI indicated by fg_st_synthesis_uri with the format identified by the tag URI fg_st_synthesis_tag_uri. The value of fg_st_synthesis_mode_idc may be in the range of 0 to 255, inclusive. Values of 2 to 255, inclusive, for fg_st_synthesis_mode_idc may be reserved for future use and may not be present in bitstreams until in use. For example, decoders may ignore SEI messages with fg_st_synthesis_mode_idc in the range of 2 to 255, inclusive. fg_st_synthesis_alignment_zero_bit_a may be equal to zero (0). fg_st_synthesis_tag_uri may include a tag URI with syntax and semantics identifying the format and associated information about the neural network that may be used as an analysis model, e.g., if/when fg_st_synthesis_model_idc indicates an synthesis model of type deep learning based (e.g., is equal to two (2)). fg_st_synthesis_tag_uri may enable (e.g., uniquely) identifying the format of neural network data specified by fg_st_synthesis_uri without a central registration authority. fg_st_synthesis_tag_uri equal to "tag:iso.org,2023:15938-17" may indicate, for example, that the neural network data identified by fg_st_synthesis_uri conforms to a specification. fg_st_synthesis_uri may include a URI with syntax and semantics identifying the neural network that may be used as an analysis model. fg_st_blending_flag[ i ] may specify the use of blending (e.g., if any) to apply the generated grain on the decoded picture after the use of the synthesis model. fg_st_blending_mode_idc [ i ] may specify the type of blending mode to apply to blend the simulated film grain with the input images.

An example definition/interpretation of fg_st_blending_idc[ i ] is shown in Table 19. As shown in Table 19: fg_st_blending_mode_idc [ i ] equal to zero (0) may specify the blending mode to use is an additive blending mode. fg_st_blending_mode_idc [ i ] equal to one (1) may specify the blending mode to use is a multiplicative blending mode. fg_st_blending_mode_idc [ i ] equal to two (2) may specify the blending mode to use is of a proprietary user defined type.

Table 19: Example definition/interpretation of fg_st_blending_idc[ i ]

| fg_st_blending_mode_idc[ i ] | Blending mode to use to blend the generated Film Grain on the decoded picture |
|---|---|
| 0 | Additive |
| 1 | Multiplicative |
| 2 | User defined |
| 3..15 | Reserved for future uses |

fg_st_comp_idc[ i ] may specify on the color component(s) of the associated primary picture(s) decoded samples the film grain may be blended using the process defined by fg_st_blending_mode_idc[ i ] and/or may indicate how many components the generated film grain may include.

An example definition/interpretation of fg_st_comp_idc[ i ] is shown in Table 20. As shown in Table 20: fg_st_comp_idc[ i ] equal to zero (0) may specify that the film grain generated from the Style Vector of index i may include a (e.g., only one) component and that the component may be applied to the luma component of the associated primary picture(s) decoded samples. fg_st_comp_idc [ i ] equal to one (1) may specify that the film grain generated from the Style Vector of index i may include (e.g., two) components and that the first component may be applied to the luma component of the associated primary picture(s) decoded samples and the second component may be applied to both chroma components of the associated primary picture(s) decoded samples. fg_st_comp_idc [ i ] equal to two (2) may specify that the film grain generated from the Style Vector of index i may include a (e.g., only one) component and that the component may be applied to the luma component and the chroma components of the associated primary picture(s) decoded samples. fg_st_comp_idc [ i ] equal to three (3) may specify that the film grain generated from the Style Vector of index i may include a (e.g., only one) component and that the component may be applied to the RGB components (after YUV to RGB conversion) of the associated primary picture(s) decoded samples. fg_st_comp_idc [ i ] equal to four (4) may specify that the film grain generated from the Style Vector of index i may include three components and that the components may be applied, respectively, to the luma and chroma components of the associated primary picture(s) decoded samples. fg_st_comp_idc [ i ] equal to five (5) may specify that the film grain generated from the Style Vector of index i may include three components and that the components may be applied, respectively, to the RGB components (after YUV to RGB conversion) of the associated primary picture(s) decoded samples. fg_st_comp_idc [ i ] equal to six (6) may specify that the mapping between the components of the film grain generated from the Style Vector of index i and the components of which to apply the film grain generated from the Style Vector of index i may correspond to a proprietary user-defined process.

Table 20: Example definition/interpretation of fg_st_comp_idc[ i ]

| fg_st_comp_idc [ i ] | Mapping between components of the generated film grain and primary picture components on which to apply the film grain |
|---|---|
| 0 | One component in the film grain applied to the luma component (Y=>Y) of the associated primary picture |
| 1 | Two components in the film grain applied as:<br>  - First component to luma component<br>  - Second component to the chroma components of the associated primary picture |
| 2 | One component in the film grain applied to the luma and chroma components of the associated primary picture |
| 3 | One component in the film grain applied to the three RGB components of the associated primary picture |
| 4 | Three components in the film grain applied to resp. luma and chroma components of the associated primary picture |
| 5 | Three components in the film grain applied to resp. the RGB components of the associated primary picture |
| 6 | User defined |
| 7..15 | Reserved for future uses |

fg_st_color_space_idc[i] may specify the color space to which the decoded picture may be converted, e.g., before being used as input to the synthesis module, corresponding to the Style Vector of index i.

An example definition/interpretation of fg_st_color_space_idc[ i ] is shown in Table 21. As shown in Table 21: fg_st_color_space_idc[ i ] equal to zero (0) may specify that the decoded picture may be converted to the YUV 4.4.4 color space, e.g., before being used as input to the synthesis module. fg_st_color_space_idc [ i ] equal to one (1) may specify that the decoded picture may be converted to the RGB color space, e.g., before being used as input to the synthesis module. fg_st_color_space_idc [ i ] equal to two (2) may specify that the decoded picture may be converted to the YUV 4.2.2 color space, e.g., before being used as input to the synthesis module. fg_st_color_space_idc [ i ] equal to three (3) may specify that the decoded picture may be converted to the YUV 4.2.0 color space, e.g., before being used as input to the synthesis module. fg_st_color_space_idc [ i ] equal to four (4) may specify that the decoded picture may be converted to a proprietary user defined color space, e.g., before being used as input to the synthesis module.

Table 21: Example definition/interpretation of fg_st_color_space_idc[ i ]

| fg_st_color space_idc [ i ] | Color space to which the decoded picture should be converted before being used as input to the synthesis module |
|---|---|
| 0 | YUV 4.4.4 color space |
| 1 | RGB color space |
| 2 | YUV 4.2.2 color space |
| 3 | YUV 4.2.0 color space |
| 4 | User defined |
| 5..15 | Reserved for future uses |

fg_st_preprocessing_flag[ i ] may specify the use of preprocessing on the Style Vector of index I, e.g., before being used as input to the synthesis module. fg_st_preprocessing_type_idc[ i ] may specify the recommended type of the preprocessing used on the Style Vector of index I, e.g., before being used as input to the synthesis module.

An example definition/interpretation of fg_st_preprocessing_type_idc[ i ] is shown in Table 22. As shown in Table 16: fg_st_preprocessing_type_idc[ i ] equal to zero (0) may specify that a scaling may be applied to the values of the Style Vector of index I, e.g., before using it as input to the synthesis module. fg_st_preprocessing_type_idc[ i ] equal to one (1) may specify that a proprietary user defined process may be used to preprocess the Style Vector of index i, e.g., before using it as input to the synthesis module.

Table 22: Example definition/interpretation of fg_st_preprocessing_type_idc[ i ]

| fg_st_preprocessing_type_idc[ i ] | Style Vector preprocessing type |
|---|---|
| 0 | Scaling |
| 1 | User defined |
| 2..15 | Reserved for future uses |

fg_st_scaling_factor[ i ] may specify which scaling may be applied to the Style Vector of index I, e.g., before being used as input to the synthesis module.

An example definition/interpretation for fg_st_scaling_factor[ i ] is shown in Table 23. As shown in Table 23: fg_st_scaling_factor [ i ] equal 0 may specify that a scaling through a multiplication by 255 may be applied to the Style Vector of index i, e.g., before using it as input to the synthesis module. fg_st_scaling_factor [ i ] equal 1 may specify that a proprietary user defined scaling may be applied to the Style Vector of index i before using it as input to the synthesis module.

Table 23: Example definition/interpretation of fg_st_scaling_factor[ i ]

| fg_st_scaling_factor[ i ] | Style Vector scaling preprocess |
|---|---|
| 0 | Scaling by multiplying by 255 |
| 1 | User defined |
| 2..15 | Reserved for future uses |

fg_st_layer_id[i] may specify the identifier of the decoder Layer for the Mask corresponding to the Style Vector of index i. fg_st_ols_number[i] may specify the number of Output Layer Sets in which the decoder layer for the Mask of the Style Vector of index i belongs to. fg_st_ols_id[ i ][ j ] may specify the identifier of the Output Layer Set for the Mask of the Style Vector of index i. The identifier may be used to associate the Style Vector information to the Mask sample values of the decoded auxiliary picture of index i. fg_st_video_quality_metric may indicate the quality metric to be considered to interpret the value of fg_st_video_quality(i). An example definition/interpretation of fg_st_video_quality_metric is shown in Table 24.

Table 24: Example definition/interpretation of fg_st_video_quality_metric

| fg_st_video_quality_metric field value | Quality metric to use when applying the process on associated primary picture decoded samples |
|---|---|
| 0x00 | PSNR |
| 0x01 | SSIM |
| 0x02 | LPIPS |
| 0x03 | JSD-NSS |
| 0x04..0x07 | Reserved for future metrics |

fg_st_video_quality[i] may specify the quality of the displayed video after applying the Film Grain generated from the Style Vector of index i. The value of fg_st_video_quality may be interpreted with regards to the fg_st_video_quality_metric[i]. Examples of metrics that may be stored in fg_st_video_quality[i] include, for example, one or more of the following: PSNR, SSIM, LPIPS, and/or JSD-NSS values for the modified picture after applying the film grain.

The quality metrics (e.g., indicated by metadata) may be computed by the decoder or (e.g., for the sake of keeping the artistic intent) may (e.g., also) be inferred at the encoder side. The quality metrics may correspond to values of expected minimal quality.

An encoder may generate the metadata. The metadata may be generated while the style vector(s) is (are) computed, e.g., at the encoder side in some examples.

FIG. 9 illustrates an example of a process for SEI message generation and bitstream encapsulation that may be performed by an encoder during encoding. The SEI message may be inserted for a given picture. For example, the considered period may correspond to one picture. As shown in FIG. 9, at 901, the style vector corresponding to film grain contained in the picture to encode may be computed through the analysis of the picture to encode. At 902, the encoding of the picture may be performed. Encoding of the picture may be optional. At 903, data about the use of the style vector and the corresponding expected quality may be collected. At 904, a Film Grain Characteristics SEI message may be generated. The SEI message may include the style vector and the accompanying information and/or collected data. The style vector and the collected data may complement in the existing information in the Film Grain Characteristics SEI message . The Film Grain Characteristics SEI message may be encoded and inserted in the bitstream at 905.

In some examples, the ordering of the workflow may be changed, e.g., 903 and 904 may be realized before 902, Other orderings may be implemented.

In some examples, multiple (e.g., several) style vectors may be computed for different parts of the image.

In some examples, multiple (e.g., several) style vectors may be computed for the (e.g., whole) image. The multiple style vectors may be applied on the decoder side, for example, (e.g., successively) in the order they are received in the SEI message.

In some examples, multiple (e.g., several) style vectors may be computed for the (e.g., whole) image. The multiple style vectors may be applied on the decoder side, for example, in an order different from the order they are received in the Film Grain Characteristics SEI message, e.g., in a proprietary order. In some examples, metadata (e.g., additional metadata) may specify the order in which the different style vectors may be applied.

In some examples, multiple (e.g., several) style vectors may be computed for the (e.g., whole) image or for parts of the image. The multiple style vectors may be used in combination, e.g., after a weighted sum of their components. Weights may be (e.g., additionally) transmitted in the Film Grain Characteristics SEI message or may be defined, e.g., in a proprietary manner. Default weights may be set (e.g., to one (1)).

In some examples, a style vector computed from an image other than the image that serves for the analysis of the grain style may be computed and inserted in the Film Grain Characteristics SEI message.

In some examples, the style vector corresponding to the image that serves for the analysis of the grain style and another style vector, e.g., coming from another image, may be inserted in the Film Grain Characteristics SEI message.

In some examples, multiple (e.g., several) style vectors may be computed from multiple (e.g., several) different film grain analyzers and may be inserted into the Film Grain Characteristics SEI message.

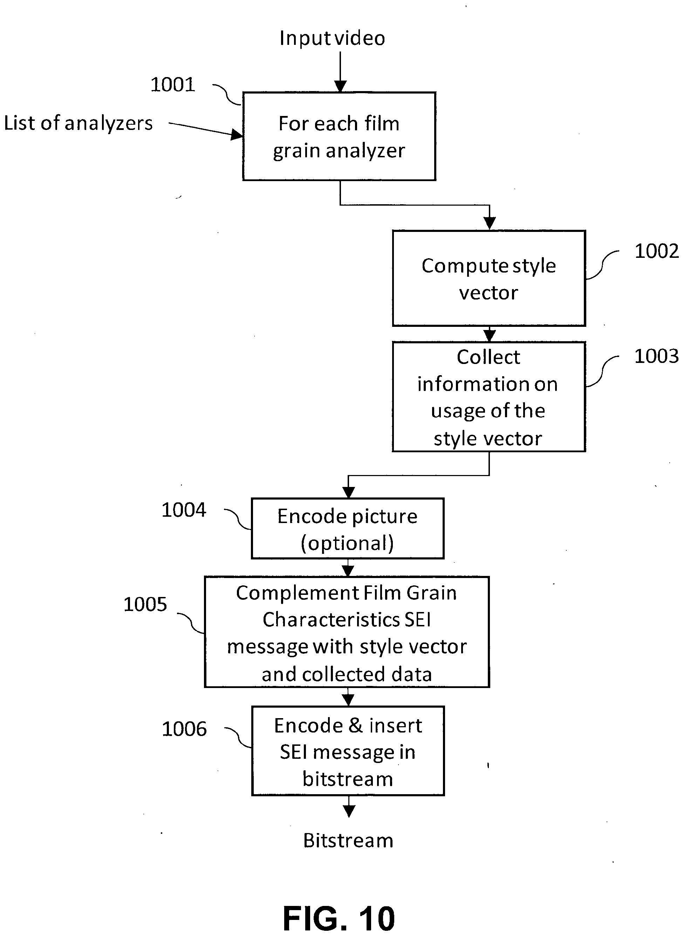

FIG. 10 illustrates a flowchart showing an example of encoder-side workflow if there is more than one film grain analyzer. As shown in FIG. 10, at 1001, a loop may be performed on a given list of film grain analyzers. At 1002, the style vector corresponding to the picture may be computed, e.g., for the grain analyzer. At 1003, data about the use of the style vector and the corresponding expected quality may be collected. At 1004, the encoding of the picture may be performed, e.g., once (e.g., all) data are collected. Encoding of the picture may be optional. At 1005, a Film Grain Characteristics SEI message is generated. The Film Grain Characteristics SEI message may include the collected metadata (e.g., the style vectors from different analyzers and the related information on their use, and their expected quality) in the style vector and the collected data may complement the existing information in the Film Grain Characteristics SEI message. At 1006, the Film Grain Characteristics SEI message may be encoded and inserted in the bitstream.

In examples, the ordering of operations may be changed in a variety of implementations. For example, an encoder may insert a Film Grain Characteristics SEI message per style vector, e.g., inside the loop on grain analyzers.

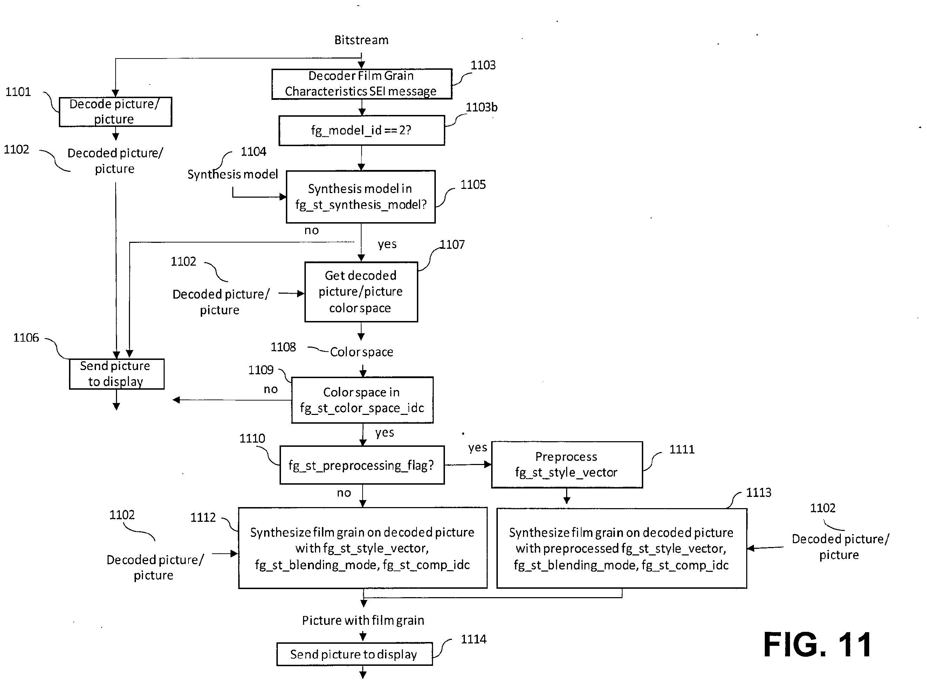

The metadata may be used, for example, following decoding. For example, the use of the style vector and its accompanying metadata may be used in a variety of examples, such as the example shown in FIG. 11. FIG. 11 depicts Film Grain Characteristics SEI message usage at the decoder. The usage of the style vector may be guided by the accompanying metadata.

FIG. 11 illustrates a flowchart showing an example of a process for decoding and use of the style vector and associated information at the receiver side. As shown in FIG. 11, at 1101, the picture may be decoded from the bitstream, producing a decoded picture 1102. Decoding of the picture may be optional. In examples, the picture may be obtained (e.g., directly obtained from the bitstream or decoded from another bitstream, or from another source). At 1103, the Film Grain Characteristics SEI message data may be retrieved from the bitstream for a picture or a group of pictures. At 1103b, the value of fg_model_id may be checked, and if equal to 2, at 1105, the synthesis model 1104 present at the decoder side may be checked against the decoded information fg_st_synthesis_model. If the value of fg_model_id is not 2 (e.g., <2), then the picture 1102 may be sent (e.g., directly) to the display at 1106. If the synthesis model 1104 of the end device is not compatible, the decoded picture 1102 may be sent (e.g., directly) to the display at 1106 (e.g., without any use of the film grain style vector).

At 1107, the color space 1308 of the decoded picture or of just a picture may be extracted. At 1109 the color space may be compared against the decoded information fg_st_color_space_idc. If the color space 1108 is compatible with fg_st_color_space_idc, then at 1310, fg_st_preprocessing_flag may be checked to get the information whether pre-processing may (e.g., is to) be applied to the film grain style vector. If the color space 1108 is not compatible, the (e.g., decoded) picture may be sent (e.g., directly) to the display in step 1106 (e.g., without any use of the style vector). In some examples, an (e.g., additional) operation of conversion of the (e.g., decoded picture) to the color space 1108 may be applied. For example, the process may continue in 1110 with the converted (e.g., decoded) picture.

At 1111, if preprocessing is to be applied, the style vector may be preprocessed. At 1113, the synthesis of film grain may be performed on the (e.g., decoded) picture 1102, e.g., according to the decoded information and the preprocessed decoded style vector. If no preprocessing is to be applied on the style vector, then, at 1112, the synthesis of film grain may be performed on the (e.g., decoded) picture 1102, e.g., according to the decoded information and the decoded style vector. The operations at 1112 and 1113 may result in a (e.g., decoded) picture with film grain corresponding to the style vector. This picture may (e.g., then) be sent to the display. Operations at 1101 and following may be realized, for example, in a decoder, a player, and/or a display.

In some examples, the use of the film grain style vector may be disabled for content pictures, for example, depending on one or more of the following: the image category (e.g., sport images, advertisements, etc.), the display settings (e.g., sport mode, etc.), etc.

In some examples, the process may be disabled, e.g., based on one or more (e.g., some additional) constraints from the end device, such as a low level of energy, an energy profile from the user that prevents using the process, etc.

In some examples, the synthesis of film grain may be disabled after the expected quality is checked (e.g., included in the flag fg_st_video_quality). The film grain synthesis is disabled, for example, if the expected quality is lower than an internal quality threshold or any other limit.

In some examples, the style vector may be modulated before being used in the synthesis, for example, by masking, by a (e.g., an additional) style vector (e.g., defined in the end device or signaled in the bitstream), through addition, etc. Modulation may be performed based on one or more parameters signaled to the decoder via the bitstream.

In some examples, post-processing may be applied on the (e.g., decoded) picture. The post-processing may be taken into account, for example, before applying the style vector. In some examples, the post-processing may be taken into account while building the style vector. At the receiver side, the style vector may be applied after (e.g., all) the post-processing. In some examples, the post-processing may not be taken into account. The style vector may be used as is for film grain synthesis, the style vector may be adapted to take the post processing into account, or the synthesis model may be adapted to take the post processing into account.

Advantages for signaling/transmitting and using a film grain style vector may include, for example, one or more of the following: enabling the synthesis of film grain at the decoder side with more fidelity and with more capability to model real film grain; and/or carrying the grain characteristics in a compact manner through a style vector.

Although features and elements are described above in particular combinations, one of ordinary skill in the art will appreciate that a (e.g., each) feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1.  A device comprising:
    a processor configured to:

    obtain a picture;
    obtain encoded data in a bitstream comprising a moving picture experts group (MPEG) film grain characteristics supplemental enhancement information (SEI) message;
    decode the encoded data to obtain the MPEG film grain characteristics SEI message comprising an at least a first style vector and a first set of parameters associated with the first style vector, wherein the first set of parameters comprises information about usage of the first style vector;
    obtain a first parameter from the MPEG film grain characteristic SEI message, wherein the parameter indicates a type of film grain simulation model of type style vector-based synthesis and a first style vector associated with the film grain simulation model, wherein the first style vector indicates a style of film grain to be applied during film grain synthesis; and
    generate the film grain on the picture, wherein the film grain is generated using a film grain simulation model of the type of film grain simulation model indicated by the first parameter, and the first style vector associated with film grain simulation model.

2.  The device of claim 1, wherein the first parameter is set to a value 2.

**EP 4 637 140 A1**

3. The device of claim 1, wherein the film grain characteristics SEI message comprises a set of parameters associated with the first style vector, wherein the set of parameters comprise at least one or more of a color space indicator, a pre-processing indicator, a channel component indicator, an analysis indicator, or a synthesis indicator, wherein the color space indicator indicates a color space to which the picture should be converted before used as an input to the film grain simulation model, and wherein the pre-processing indicator indicates whether to preprocess the style vector before applying the style vector to the picture, wherein the channel component indicator indicates on which channel component of said picture the film grain should be synthesized, wherein the analysis indicator indicates which analyzer model was used to generate the style vector, wherein the synthesis indicator indicates which synthesizer model should be used to generate film grain on the picture.

4. The device of claim 1, wherein the processor is configured to:
determine from the first set of parameters that a pre-processing indicator is to be applied to the first style vector; and based on the determination that the pre-processing indicator is to be applied to the style vector, pre-process the style vector.

5. The device of claim 1, wherein the MPEG film grain characteristics SEI message comprises a second style vector and a second set of parameters associated with the second style vector, wherein the second set of parameters comprises information associated with usage of the second style vector.

6. The device of claim 5, wherein the first set of parameters comprises a second parameter representative of a style vector aggregation process to be used to aggregate the first style vector and the second style vector to generate an aggregated style vector for use to synthesize film grain on the picture.

7. The device of claim 5, wherein at least the first style vector or the second style vector are computed to be used on different parts of the picture.

8. A method comprising:

obtaining a picture;
obtaining encoded data in a bitstream comprising a moving picture experts group (MPEG) film grain characteristics supplemental enhancement information (SEI) message;
decoding the encoded data to obtain the MPEG film grain characteristics SEI message comprising an at least a first style vector and a first set of parameters associated with the first style vector, wherein the first set of parameters comprises information about usage of the first style vector;
obtaining a first parameter from the MPEG film grain characteristic SEI message, wherein the parameter indicates a type of film grain simulation model of type style vector-based synthesis and a first style vector associated with the film grain simulation model, wherein the first style vector indicates a style of film grain to be applied during film grain synthesis; and
generating the film grain on the picture, wherein the film grain is generated using a film grain simulation model of the type of film grain simulation model indicated by the first parameter, and the first style vector associated with film grain simulation model.

9. The method of claim 8, wherein the first parameter is set to a value 2.

10. The method of claim 8, wherein the film grain characteristics SEI message comprises a set of parameters associated with the first style vector, wherein the set of parameters comprise at least one or more of a color space indicator, a pre-processing indicator, a channel component indicator, an analysis indicator, or a synthesis indicator, wherein the color space indicator indicates a color space to which the picture should be converted before used as an input to the film grain simulation model, and wherein the pre-processing indicator indicates whether to preprocess the style vector before applying the style vector to the picture, wherein the channel component indicator indicates on which channel component of said picture the film grain should be synthesized, wherein the analysis indicator indicates which analyzer model was used to generate the style vector, wherein the synthesis indicator indicates which synthesizer model should be used to generate film grain on the picture.

11. The method of claim 8, further comprising:

determining from the first set of parameters that a pre-processing indicator is to be applied to the first style vector; and

based on the determination that the pre-processing indicator is to be applied to the style vector, pre-processing the style vector.

12. The method of claim 8, wherein the MPEG film grain characteristics SEI message comprises a second style vector and a second set of parameters associated with the second style vector, wherein the second set of parameters comprises information associated with usage of the second style vector.

13. The method of claim 12, wherein the first set of parameters comprises a second parameter representative of a style vector aggregation process to be used to aggregate the first style vector and the second style vector to generate an aggregated style vector for use to synthesize film grain on the picture.

14. The method of claim 12, wherein at least the first style vector or the second style vector are computed to be used on different parts of the picture.

15. The device of claim 5 or the method of claim 12, wherein size of the first style vector or the second style vector is 8 bits.

FIG. 1A

**FIG. 1B**

**FIG. 1C**

FIG. 1D

**FIG. 2**

**300**

FIG. 3

**400**

**FIG. 4**

EP 4 637 140 A1

FIG. 5

Grain 16x16 to be added to the filtered frame in the spatial domain

Inverse DCT

Direct DCT

16

Null values

Horizontal cutoff frequency

Random Gaussian Noise

$N(0, \sigma^2)$

16

Vertical cutoff frequency

**FIG. 6**

**FIG. 7**

EP 4 637 140 A1

**FIG. 8**

Input video

901 — Computation of style vector

902 — Encode picture (optional)

903 — Collect information on usage of the style vector

904 — Complement Film Grain Characteristics SEI message with style vector and collected data

905 — Encode & insert SEI message in bitstream

Bitstream

**FIG. 9**

Input video

1001

List of analyzers

For each film
grain analyzer

Compute style
vector

1002

Collect
information on
usage of the
style vector

1003

1004

Encode picture
(optional)

1005

Complement Film Grain
Characteristics SEI
message with style vector
and collected data

1006

Encode & insert
SEI message in
bitstream

Bitstream

# FIG. 10

FIG. 11

Europäisches Patentamt

European Patent Office

Office européen des brevets

## EUROPEAN SEARCH REPORT

**Application Number**

EP 24 31 5170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AMEUR ZOUBIDA ET AL: "Style-based film grain analysis and synthesis", PROCEEDINGS OF THE 32ND INTERNATIONAL SYMPOSIUM ON HIGH-PERFORMANCE PARALLEL AND DISTRIBUTED COMPUTING, ACMPUB27, NEW YORK, NY, USA, 7 June 2023 (2023-06-07), pages 229-238, XP059433262, DOI: 10.1145/3587819.3590992 ISBN: 979-8-4007-0284-6 | 1,2,8,9, 15 | INV. H04N19/117 H04N19/46 H04N19/70 H04N19/85 |
| Y | * abstract * * sections 1, 2, 3, 5 * ----- | 3-7, 10-14 | |
| X | TENIOU (TENCENT) G ET AL: "AHG9/AHG13: FGS Extension SEI message useful descriptors", 145. MPEG MEETING; 20240122 - 20240126; ONLINE; (MOTION PICTURE EXPERT GROUP OR ISO/IEC JTC1/SC29/WG11), , no. m66056 10 January 2024 (2024-01-10), XP030315212, Retrieved from the Internet: URL:https://dms.mpeg.expert/doc_end_user/d ocuments/145_Teleconference/wg11/m66056-JV ET-AG0160-v1-JVET-AG0160.zip JVET-AG0160-FGS-extension-useful descriptors.docx [retrieved on 2024-01-10] * abstract * * sections 1, 2, 8.X.1, 8.X.2 * ----- | 1,2,8,9, 15 | TECHNICAL FIELDS SEARCHED (IPC) H04N |
| Y | WO 2023/110642 A1 (INTERDIGITAL VC HOLDINGS FRANCE SAS [FR]) 22 June 2023 (2023-06-22) | 3-7, 10-14 | |
| A | * the whole document * ----- | 1,8 | |

-/--

The present search report has been drawn up for all claims

| Place of search | Date of completion of the search | Examiner |
|---|---|---|
| Munich | 4 September 2024 | Fassnacht, Carola |

EPO FORM 1503 03.82 (P04C01)

page 1 of 3

Europäisches
Patentamt

European
Patent Office

Office européen
des brevets

# EUROPEAN SEARCH REPORT

**Application Number**

EP 24 31 5170

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE LAGRANGE (INTERDIGITAL) P ET AL: "AHG13: Proposed film grain synthesis reference model", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0115 ; m59446 27 April 2022 (2022-04-27), XP030300957, Retrieved from the Internet: URL:https://jvet-experts.org/doc_end_user/documents/26_Teleconference/wg11/JVET-Z0115-v3.zip JVET-Z0115-v2.docx [retrieved on 2022-04-27] * abstract * * sections 1, 2 * | 1-15 | |
| A | DE LAGRANGE (INTERDIGITAL) P ET AL: "AHG13: Improvements of film grain analysis", 26. JVET MEETING; 20220420 - 20220429; TELECONFERENCE; (THE JOINT VIDEO EXPLORATION TEAM OF ISO/IEC JTC1/SC29/WG11 AND ITU-T SG.16 ), , no. JVET-Z0047 ; m59338 24 April 2022 (2022-04-24), XP030300791, Retrieved from the Internet: URL:https://jvet-experts.org/doc_end_user/documents/26_Teleconference/wg11/JVET-Z0047-v3.zip JVET-Z0047_ImprovedFgAnalysis.docx [retrieved on 2022-04-24] * abstract * * section 1 * | 1-15 | **TECHNICAL FIELDS SEARCHED (IPC)** |

-/--

The present search report has been drawn up for all claims

| Place of search | Date of completion of the search | Examiner |
|---|---|---|
| Munich | 4 September 2024 | Fassnacht, Carola |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                               
& : member of the same patent family, corresponding
document

EPO FORM 1503 03.82 (P04C01)

Europäisches
Patentamt

European
Patent Office

Office européen
des brevets

## EUROPEAN SEARCH REPORT

**Application Number**

EP 24 31 5170

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TENIOU (TENCENT) G ET AL: "AHG9/AHG13: unified proposal on film grain regions characteristics SEI message", 145. MPEG MEETING; 20240122 - 20240126; ONLINE; (MOTION PICTURE EXPERT GROUP OR ISO/IEC JTC1/SC29/WG11), , no. m66890 24 January 2024 (2024-01-24), XP030316597, Retrieved from the Internet: URL:https://dms.mpeg.expert/doc_end_user/documents/145_Teleconference/wg11/m66890-JVET-AG0328-v4-JVET-AG0328-v4.zip JVET-AG0328-v4.docx [retrieved on 2024-01-24] | 7,14 | |
| A | * abstract * * sections 1, 2, 3 * | 1-6, 8-13,15 | |
| | ----- | | |
| | | | **TECHNICAL FIELDS SEARCHED (IPC)** |

The present search report has been drawn up for all claims

| Place of search | Date of completion of the search | Examiner |
|---|---|---|
| Munich | 4 September 2024 | Fassnacht, Carola |

EPO FORM 1503 03.82 (P04C01)

page 3 of 3

## ANNEX TO THE EUROPEAN SEARCH REPORT
## ON EUROPEAN PATENT APPLICATION NO.

EP 24 31 5170

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2024

| Patent document cited in search report | Publication date | Patent family member(s) | Publication date |
|---|---|---|---|
| WO 2023110642 A1 | 22-06-2023 | CN 118435608 A<br>WO 2023110642 A1 | 02-08-2024<br>22-06-2023 |